# EUROPÄISCHE PATENTSCHRIFT

(11) **EP 3 728 099 B1**
(45) Veröffentlichungstag und Bekanntmachung des Hinweises auf die Patenterteilung: **07.06.2023**
(21) Anmeldenummer: 18821676.6
(22) Anmeldetag: 21.11.2018
(51) Int. Cl.: B66C 13/46, B66C 13/56, B66C 19/00, G05G 9/047

(54) **KRANSTEUERUNG**
CRANE CONTROLLER
COMMANDE DE GRUE

(30) Priorität: 21.12.2017 AT 4962017
(43) Veröffentlichungstag der Anmeldung: 28.10.2020
(73) Patentinhaber: Hans Künz GmbH, 6971 Hard (Vbg.) (AT)
(72) Erfinder: BEER, Roman, 6883 Au (AT); MOOSBRUGGER, David, 6870 Bezau (AT); MALOUVIER, Patrick, 6991 Riezlern (AT)
(74) Vertreter: Torggler & Hofmann Patentanwälte - Rankweil
(86) Internationale Anmeldenummer: PCT/AT2018/000093
(87) Internationale Veröffentlichungsnummer: WO 2019/118992

(56) Entgegenhaltungen:
- EP-A1- 1 980 441
- DE-A1- 19 501 439
- US-A- 5 160 918
- US-A1- 2012 065 847

## Beschreibung

Die vorliegende Erfindung betrifft eine Kransteuerung zur Steuerung von Verfahrbewegungen eines Krans, insbesondere eines Portalkrans, wobei die Kransteuerung eine Steuerelektronik und zumindest ein mit der Steuerelektronik verbundenes Eingabegerät mit einem Griffstück umfasst, wobei eine Hauptachse des Griffstücks zusammen mit dem Griffstück in zumindest zwei, insbesondere orthogonal, zueinander ausgerichteten Schwenkrichtungen verschwenkbar ist und von der Steuerelektronik elektrische Signale zur Ansteuerung von zumindest einem Aktor des Krans, in Abhängigkeit von einer Verstellung des Griffstücks relativ zu einer Ursprungslage des Griffstücks, generierbar sind. Im Weiteren betrifft die Erfindung eine Anordnung mit einer Steuerkabine und einer Kransteuerung, sowie einen Kran und ein Verfahren zur Steuerung von Verfahrbewegungen eines Krans.

Krane werden zum Bewegen von Containern oder sonstigen Lasten eingesetzt. Insbesondere beim Umschlagen von Containern sind hohe Verfahrgeschwindigkeiten und präzise Bewegungen des Krans wichtig, um hohe Umschlagleistungen zu erzielen. Krane, insbesondere Portalkrane, weisen dabei mehrere Freiheitsgrade zur Ausführung der Verfahrbewegungen auf.

Ein Beispiel für einen als Portalkran ausgeführten Kran ist in der AT 516981 A1 gezeigt. Der Portalkran gemäß dieser Schrift ist als Ganzes entlang von Kranschienen relativ zum Untergrund bewegbar. Im Weiteren weist der Kran eine Transporteinrichtung zum Transport des Containers auf, welche entlang eines Kranträgers des Krans verschiebbar gelagert ist. Die Transporteinrichtung umfasst eine Laufkatze und eine Lastaufnahmevorrichtung zur Verbindung mit dem Container oder der sonstigen Last, wobei die Lastaufnahmevorrichtung mittels Seilen heb- und senkbar an der Laufkatze hängt. Die freie Seillänge der Seile ist gemäß dieser Schrift individuell einstellbar. Dadurch kann die Lastaufnahmevorrichtung in einem Feinpositioniermodus relativ zur Laufkatze präzise ausgerichtet werden, um beispielsweise einen schräg stehenden Container aufzunehmen oder diesen auf einem anderen Container oder einem Lastwagen abzustellen. Insgesamt kann die Lastaufnahmevorrichtung gemäß dieser Schrift in sechs Freiheitsgraden bewegt werden.

Die vielfältigen Verfahrbewegungen der Lastaufnahmevorrichtung, der Laufkatze und des Krans als Ganzes werden durch eine Ansteuerung von Aktoren des Krans mittels einer Kransteuerung ausgeführt. Die Eingabe der gewünschten Verfahrbewegungen erfolgt durch den Kranbediener mittels Eingabegeräten zur Bedienung des Krans.

Im Stand der Technik ist es bekannt, Eingabegeräte mit einem verstellbaren Griffstück zu verwenden. Derartige Eingabegeräte werden auch als Steuerhebel oder Joystick bezeichnet. Das Griffstück des Eingabegeräts ist in zumindest zwei voneinander verschiedene Schwenkrichtungen verschwenkbar. Ein Ausmaß der Verstellung des Griffstücks des Eingabegeräts, ausgehend von einer Ursprungslage des Griffstücks, ist von einer Steuerelektronik der Kransteuerung auslesbar. Die Steuerelektronik generiert aus den Daten, die das Ausmaß der Verstellung des Griffstücks beschreiben, elektrische Signale zur Ansteuerung des zumindest einen Aktors des Krans.

Häufig weist die Kransteuerung zumindest zwei Joysticks auf, um komplizierte überlagerte Verfahrbewegungen des Krans zu ermöglichen. Die Bedienung eines Krans mit zwei Joysticks ist komplex, da beide Joysticks gleichzeitig zu bedienen sind, um die vielfältigen Verfahrbewegungen des Krans vorgeben zu können und eine hohe Umschlagleistung zu erreichen. Da mittels der Joysticks in der Regel Translationsbewegungen und/oder Rotationsbewegungen des Krans in Form einer Schwenkbewegung des Griffstücks einzugeben sind, ist die Bedienung des Krans auch wenig intuitiv und stellt hohe Konzentrationsanforderungen an den Kranbediener. Auch ist das Erlernen der Bedienung des Krans zeitaufwändig.

Aus der EP 1 980 441 A1 ist ein Steuerknüppel für ein Fahrzeug bekannt, welcher zur Steuerung von Fahrfunktionen des Fahrzeugs und/oder Zusatzfunktionen des Fahrzeugs verwendet wird. Das Handsteuergerät weist einen Griff auf, der gegenüber einer Basis in zwei orthogonal zueinander ausgerichteten Schwenkrichtungen verschwenkbar ist. Zusätzlich ist der Griff um eine vertikale Schwenkachse gegenüber der Basis verschwenkbar. Von der Steuerelektronik der Fahrzeugs sind elektrische Signale zur Ansteuerung von verschiedenen Aktoren des Fahrzeugs in Abhängigkeit von der Verstellung des Griffstücks relativ zur Ursprungslage generierbar. Die EP 1 980 441 A1 offenbart eine Kransteuerung gemäß dem Oberbegriff des unabhängigen Anspruchs 1.

Ähnliche Joysticks mit drei Rotationsfreiheitsgraden sind in der US 5,160,918 A und der DE 195 01 439 A1 gezeigt.

Aufgabe der Erfindung ist es, eine vorteilhafte Kransteuerung der eingangs genannten Art bereitzustellen, die eine intuitivere Vorgabe der Verfahrbewegungen des Krans ermöglicht.

Erfindungsgemäß gelingt dies mit einer Kransteuerung gemäß Anspruch 1.

Bei der Kransteuerung gemäß der Erfindung ist vorgesehen, dass das Griffstück mit der Hauptachse relativ zur Ursprungslage zusätzlich in zumindest zwei, vorzugsweise drei, voneinander verschiedenen Verschieberichtungen verschiebbar ist und von der Steuerelektronik elektrische Signale zur Ansteuerung des zumindest einen Aktors des Krans, in Abhängigkeit von der Verstellung des Griffstücks relativ zur Ursprungslage, generierbar sind.

Besonders bevorzugt ist es, wenn das Griffstück relativ zur Ursprungslage zusätzlich um die Hauptachse drehbar, wobei von der Steuerelektronik elektrische Signale zur Ansteuerung des zumindest einen Aktors des Krans, in Abhängigkeit von der Verstellung des Griffstücks relativ zur Ursprungslage, generierbar sind.

Dadurch ist es möglich, zusätzlich zur Verschwenkung des Griffstücks in den zumindest zwei Schwenkrichtungen, Verschiebungen des Griffstücks in zumindest zwei Verschieberichtungen und gegebenenfalls Verdrehungen des Griffstücks um die Hauptachse zur Eingabe von Verfahrbewegungen des Krans heranzuziehen, wobei von der Steuerelektronik, in Abhängigkeit von der Verstellung des Griffstücks relativ zur Ursprungslage, elektrische Signale zur Ansteuerung der Aktoren des Krans generiert werden können. Eine Verstellung des Griffstücks kann somit zumindest eine Verschwenkung der Hauptachse samt Griffstück und/oder zumindest eine Verschiebung der Hauptachse samt Griffstück und gegebenenfalls eine Verdrehung des Griffstücks um seine Hauptachse oder eine Überlagerung solcher Bewegungen sein. Dadurch können zusätzliche Verfahrbewegungen des Krans mit dem Eingabegerät der erfindungsgemäßen Kransteuerung sehr intuitiv vorgegeben werden. Dies vereinfacht die Bedienung des Krans wesentlich, da mit einem einzigen Eingabegerät zusätzliche Verfahrbewegungen des Krans eingegeben bzw. vorgegeben werden können.

Eine weitere Verstellung des Griffstücks ausgehend von einer bereits erfolgten Verstellung des Griffstücks relativ zur Ursprungslage wird im Sinne der Erfindung ebenfalls als eine Verstellung relativ zur Ursprungslage angesehen.

Erfindungsgemäß ist das Griffstück in zumindest zwei voneinander verschiedene Verschieberichtungen verschiebbar. Man könnte auch davon sprechen, dass die Hauptachse des Griffstücks zusammen mit dem Griffstück zusätzlich zur Verschwenkung in die zumindest zwei, insbesondere orthogonal, zueinander ausgerichteten Schwenkrichtungen, in die zumindest zwei voneinander verschiedenen Verschieberichtungen verschoben werden kann.

Günstigerweise sind die zwei voneinander verschiedenen Verschieberichtungen orthogonal zueinander und jeweils orthogonal zur Hauptachse des Griffstücks ausgerichtet.

Ist das Griffstück in drei voneinander verschiedenen Verschieberichtungen verschiebbar, so ist günstigerweise vorgesehen, dass zwei der Verschieberichtungen orthogonal zueinander ausgerichtet und jeweils orthogonal zur Hauptachse ausgerichtet sind und dass die dritte der Verschieberichtungen parallel zur Hauptachse ausgerichtet ist. Das Griffstück ist dann zusätzlich entlang der Hauptachse verschiebbar.

Vorteilhaft ist es, wenn die Hauptachse des Griffstücks zusammen mit dem Griffstück in beliebige Schwenkrichtungen verschwenkbar ist. Die Hauptachse des Griffstücks ist dann zusammen mit dem Griffstück um zumindest einen auf der Hauptachse liegenden Kipppunkt beliebig verschwenkbar. Dadurch kann zusätzlich zu den, insbesondere orthogonal, zueinander ausgerichteten Schwenkrichtungen jede beliebige Schwenkrichtung vom Kranbediener eingegeben werden. Die gleichzeitige Verschwenkung in jede beliebige Schwenkrichtung kann dann als eine kombinierte Verschwenkung der Hauptachse in orthogonal zueinander ausgerichteten Schwenkrichtungen ausgedrückt werden.

Bevorzugt ist es, wenn das Griffstück beliebig in die zumindest zwei, vorzugsweise drei, Verschieberichtungen verschiebbar ist. Eine Verschiebung des Griffstücks kann dann durch eine kombinierte Verschiebung des Griffstücks in den zumindest zwei, vorzugsweise drei, Verschieberichtungen ausgedrückt werden.

Besonders bevorzugt ist es, wenn das Griffstück ausgehend von der Ursprungslage beliebig verschiebbar und verdrehbar ist. Das Griffstück weist dann sechs Freiheitsgrade zur Vorgabe von Verfahrbewegungen des Krans auf. Die sechs Freiheitsgrade umfassen drei Translations-Freiheitsgrade und drei Rotations-Freiheitsgrade. D.h., das Griffstück ist beliebig, insbesondere gleichzeitig, in die drei voneinander verschiedenen, orthogonal zueinander ausgerichteten, Verschieberichtungen verschiebbar und um die orthogonal zueinander ausgerichteten Schwenkrichtungen verschwenkbar und um die Hauptachse verdrehbar. Dadurch kann eine Verschiebung und/oder Verdrehung des Griffstücks in eine beliebige Richtung in eine entsprechende Verschiebung und/oder Verdrehung des Krans bzw. der bewegbaren Komponenten des Krans, beispielsweise einer Lastaufnahmevorrichtung des Krans, umgesetzt werden. Da eine räumliche Verfahrbewegung des Krans bzw. der bewegbaren Komponenten des Krans durch eine räumliche Verstellung des Griffstücks ausgehend von der Ursprungslage vorgegeben werden kann, ist eine besonders intuitive Bedienung des Krans bzw. der Komponenten des Krans realisierbar.

Zur Erfassung des Ausmaßes der Verstellung des Griffstücks weist das Eingabegerät günstigerweise Sensoren auf. Bei den Sensoren könnte es sich beispielsweise um opto-elektronische Sensoren handeln. Eine geeignete Sensorik ist z.B. von sogenannten 3-D-Mäusen zur Bedienung von Computern bekannt. Die von den Sensoren gemessenen Messwerte sind von der Steuerelektronik einlesbar.

Das Griffstück ist von einem Kranbediener mit einer, vorzugsweise einzigen, Hand greifbar und verstellbar. Das Griffstück könnte auch als Steuerkörper oder als Puck bezeichnet werden.

Bei der Steuerelektronik könnte es sich um eine speicherprogrammierbare Steuerung oder um einen Mikrocontroller oder um einen Rechner handeln. Günstigerweise ist das Eingabegerät mit der Steuerelektronik über eine kabelgebundene oder eine kabellose Datenverbindung verbunden.

Die Kransteuerung gemäß der Erfindung dient zur Steuerung von Verfahrbewegungen eines physisch vorhandenen Krans. D.h. mit der Kransteuerung werden die Verfahrbewegungen des Krans zur Manipulation von Containern oder sonstiger Lasten, z.B. in einem Container-Terminal, gesteuert.

In bevorzugten Ausführungsformen gemäß der Erfindung ist vorgesehen, dass ein Geschwindigkeitswert des zumindest einen Aktors von der Steuerelektronik variierbar ist und der Geschwindigkeitswert von der Steuerelektronik in Abhängigkeit von einem Ausmaß der Verstellung des Griffstücks ausgehend von der Ursprungslage des Griffstücks einstellbar ist. Beispielsweise kann der zumindest eine von der Steuerelektronik ansteuerbare Aktor des Krans ein drehzahlvariabler Elektromotor sein, wobei die Drehzahl, d.h. der Geschwindigkeitswert des Elektromotors, in Abhängigkeit vom Ausmaß der Verstellung des Griffstücks einstellbar ist. In einem anderen Anwendungsfall könnte der zumindest eine Aktor ein einstellbares Hydraulikventil zur Einstellung eines Volumenstroms in Abhängigkeit vom Ausmaß der Verstellung des Griffstücks umfassen. Durch eine Variation des Volumenstroms kann damit der Geschwindigkeitswert einer Verfahrbewegung eines Hydraulikzylinders des Aktors variiert werden.

Vorzugsweise führt eine größere Auslenkung des Griffstücks ausgehend von der Ursprungslage zu einer größeren Geschwindigkeit des von der Steuerelektronik ansteuerbaren Aktors als eine kleinere Auslenkung. Die Variation des Geschwindigkeitswerts kann dabei direkt proportional zum Ausmaß der Verstellung des Griffstücks einstellbar sein. Es wäre aber auch denkbar und möglich, eine andere Abhängigkeitsfunktion des Geschwindigkeitswerts vom Ausmaß der Verstellung vorzusehen, beispielsweise eine logarithmische Abhängigkeit.

Günstigerweise weist das Griffstück zumindest ein Rückstellelement zur selbsttätigen Rückstellung des Griffstücks in die Ursprungslage auf. Durch ein Loslassen des Griffstücks ist es möglich, die mittels des Eingabegeräts eingebbaren Verfahrbewegungen des Krans rasch zu stoppen. Beispielsweise könnte das Eingabegerät zumindest eine Feder zur Rückstellung des Griffstücks in die Ursprungslage aufweisen.

Vorzugsweise ist vorgesehen, dass die Kransteuerung ein zwischen einer ersten und einer zweiten Schaltstellung umschaltbares Umschaltelement aufweist, wobei in der ersten Schaltstellung ein Grobpositioniermodus und in der zweiten Schaltstellung ein Feinpositioniermodus der Kransteuerung aktiviert ist. Das Umschaltelement kann z.B. einen Schalter aufweisen, der zumindest zwei Schaltstellungen aufweist. Die Kransteuerung könnte noch weitere Umschaltelemente zur Aktivierung weiterer Betriebsmodi der Kransteuerung aufweisen. In einer weiteren möglichen Ausführungsform könnte das Umschaltelement zumindest zwei Taster umfassen, welche wechselweise aktivierbar sind.

In einer bevorzugten Ausführungsform weist die Kransteuerung ein Bedienpult auf, auf welchem das Eingabegerät, und gegebenenfalls das zumindest eine Umschaltelement, angeordnet ist oder sind.

Besonders bevorzugt ist es, wenn von der Steuerelektronik in Abhängigkeit von der Schaltstellung des Umschaltelements elektrische Signale für unterschiedliche Aktoren des Krans, in Abhängigkeit von der Verstellung des Griffstücks relativ zur Ursprungslage, generierbar sind. Dadurch können unterschiedliche Verfahrbewegungen des Krans mit ein- und demselben Eingabegerät angesteuert werden. Es ist denkbar und möglich, dass nur ein Teil der Aktoren bei einer Umschaltung des Umschaltelements zwischen der ersten und der zweiten Schaltstellung umgeschaltet werden. Beispielsweise könnten dieselben Aktoren mit unterschiedlichen Verfahrgeschwindigkeiten ansteuerbar sein. Z.B. wäre es denkbar und möglich, dass ein Hubwerk des Krans zum Grobpositionieren, d.h. im Grobpositioniermodus der Kransteuerung, mit größeren Verfahrgeschwindigkeiten verfahrbar ist als im Feinpositioniermodus der Kransteuerung. Dadurch kann im Feinpositioniermodus eine präzise Positionierung der Lastaufnahmevorrichtung des Krans vorgenommen werden.

Im Weiteren umfasst die Erfindung eine Anordnung mit einer Steuerkabine und einer erfindungsgemäßen Kransteuerung. Günstigerweise ist vorgesehen, dass das zumindest eine Eingabegerät der Kransteuerung in der Steuerkabine angeordnet ist. Besonders bevorzugt ist es, wenn das zumindest eine Eingabegerät der Kransteuerung an einem in der Steuerkabine angeordneten Steuersitz angeordnet ist. Die Steuerkabine könnte auch als Krankabine bezeichnet werden. Die Steuerkabine dient als Arbeitsplatz des Kranbedieners des Krans. Beispielsweise könnte das zumindest eine Eingabegerät an einer Armlehne des Steuersitzes angeordnet sein. Das gegebenenfalls vorhandene Umschaltelement ist vorzugsweise ebenfalls in der Steuerkabine, besonders bevorzugt am Steuersitz, angeordnet.

In einer anderen erfindungsgemäßen Ausführungsform wäre es denkbar, dass das zumindest eine Eingabegerät der Kransteuerung an einem Fernsteuerstand einer Fernsteueranlage zur Bedienung des Krans angeordnet ist. Der Fernsteuerstand der Fernsteueranlage könnte beispielsweise in einem Gebäude angeordnet sein. Der Fernsteuerstand könnte auch als Remote Operation Station bezeichnet werden. Derartige Anordnungen zur Fernsteuerung eines Krans sind an sich bekannt. Die Fernsteueranlage könnte zumindest eine am Kran angeordnete Kamera zur Überwachung der Kranbewegungen umfassen, deren Aufzeichnung dem Kranbediener live auf zumindest einem Bildschirm des Fernsteuerstands - zur Unterstützung der Bedienung des Krans - anzeigbar ist. Das gegebenenfalls vorhandene Umschaltelement ist vorzugsweise ebenfalls am Fernsteuerstand angeordnet. Im Weiteren wäre es denkbar und möglich, dass das zumindest eine Eingabegerät und das gegebenenfalls vorhandene Umschaltelement an einer, insbesondere tragbaren, Funkfernbedienung der Kransteuerung angeordnet ist. Dadurch ist die Bedienung des Krans von wechselnden Standorten des Kranbedieners aus möglich.

Im Weiteren umfasst die Erfindung einen Kran, insbesondere einen Portalkran, wobei der Kran zumindest drei, unabhängig voneinander ansteuerbare, Aktoren zum Bewegen zumindest eines Containers oder einer sonstigen Last und eine erfindungsgemäße Kransteuerung umfasst, wobei vorgesehen ist, dass von der Steuerelektronik, in Abhängigkeit von der Verstellung des Griffstücks relativ zur Ursprungslage, elektrische Signale zur Ansteuerung der Aktoren des Krans generierbar sind.

Unter "unabhängig voneinander ansteuerbare Aktoren" sind Antriebe des Krans gemeint, die einzeln, d.h. individuell, ansteuerbar sind und zur Ausführung voneinander verschiedener Verfahrbewegungen des Krans herangezogen werden.

Günstigerweise ist vorgesehen, dass mittels der Kransteuerung gleichzeitig bis zu sechs oder mehr voneinander unabhängige Aktoren des Krans ansteuerbar sind und/oder dass gleichzeitig Verfahrbewegungen des Krans in bis zu sechs Freiheitsgraden, in Abhängigkeit von der Verstellung des Griffstücks, ausführbar sind.

In einer bevorzugten Ausführungsform des erfindungsgemäßen Krans kann vorgesehen sein, dass die in einem oder dem Grobpositioniermodus der Kransteuerung mittels des Eingabegeräts ansteuerbaren Aktoren des Krans zumindest einen Fahrantrieb zum Bewegen eines Kranträgers des Krans, vorzugsweise des gesamten Krans, in einander entgegengesetzte Kran-Fahrrichtungen und zumindest einen Laufkatzenantrieb zum Bewegen einer Laufkatze des Krans entlang des Kranträgers in einander entgegengesetzte Laufkatzen-Bewegungsrichtungen und zumindest einen Hubwerksantrieb zum Bewegen einer Lastaufnahmevorrichtung relativ zur Laufkatze in einander entgegengesetzte Hub-Richtungen umfassen.

Günstigerweise dient eine Verstellung des Griffstücks des Eingabegeräts in eine erste Verschieberichtung, die orthogonal zur Hauptachse des Griffstücks ausgerichtet ist, zur Eingabe oder Vorgabe einer Verfahrbewegung des Kranträgers, insbesondere des gesamten Krans, in die einander entgegengesetzten Kran-Fahrrichtungen. D.h. die Steuerelektronik generiert in Abhängigkeit von der Verstellung des Griffstücks relativ zur Ursprungslage in die erste Verschieberichtung elektrische Signale zur Ansteuerung des zumindest einen Fahrantriebs des Krans.

Analog könnte eine Verstellung des Griffstücks in einer zur ersten Verschieberichtung orthogonal ausgerichteten zweiten Verschieberichtung, die orthogonal zur Hauptachse des Griffstücks ausgerichtet ist, zur Eingabe oder Vorgabe einer Verfahrbewegung der Laufkatze entlang des Kranträgers herangezogen werden. Die Steuerelektronik generiert somit, in Abhängigkeit von der Verstellung des Griffstücks relativ zur Ursprungslage in die zweite Verschieberichtung, elektrische Signale zur Ansteuerung des zumindest einen Laufkatzenantriebs des Krans.

Weiters könnte vorgesehen sein, dass eine Verschiebung des Griffstücks in eine dritte Verschieberichtung, welche parallel zur Hauptachse des Griffstücks ausgerichtet ist, zur Eingabe oder Vorgabe einer Verfahrbewegung der Lastaufnahmevorrichtung relativ zur Laufkatze in die einander entgegengesetzten Hub-Richtungen dient. Die Steuerelektronik generiert hierzu in Abhängigkeit von der Verstellung des Griffstücks relativ zur Ursprungslage in die dritte Verschieberichtung elektrische Signale zur Ansteuerung des zumindest einen Hubwerkantriebs des Krans.

Zusammenfassend sind dann im Grobpositioniermodus die Verfahrbewegungen des Kranträgers, insbesondere des gesamten Krans, und der Laufkatze und der Lastaufnahmevorrichtung von der Steuerelektronik der Kransteuerung durch Generieren elektrischer Signale zur Ansteuerung der Aktoren, in Abhängigkeit von der Verstellung des Griffstücks relativ zur Ursprungslage, umsetzbar.

Es könnte vorgesehen sein, dass die im Grobpositioniermodus der Kransteuerung mittels des Eingabegeräts ansteuerbaren Aktoren des Krans zusätzlich zumindest einen Drehantrieb zum Verdrehen der Lastaufnahmevorrichtung relativ zur Laufkatze in einer, vorzugsweise orthogonal zu den Hub-Richtungen ausgerichteten, Drehebene umfassen. Drehantriebe, auch Drehwerke genannt, sind im Kranbau hinlänglich bekannt und dienen zum Verdrehen des Containers um eine, insbesondere vertikale, Achse. Eine Verdrehung des Griffstücks um die Hauptachse könnte zur Eingabe oder Vorgabe einer Verdrehung der Lastaufnahmevorrichtung in der Drehebene dienen. Die Steuerelektronik generiert hierzu in Abhängigkeit von der Verdrehung des Griffstücks relativ zur Ursprungslage um die Hauptachse des Griffstücks elektrische Signale zur Ansteuerung des zumindest einen Drehantriebs des Krans.

Alternativ oder zusätzlich kann vorgesehen sein, dass die in einem oder dem Feinpositioniermodus der Kransteuerung mittels des Eingabegeräts ansteuerbaren Aktoren des Krans Feinpositionierantriebe zur Feinausrichtung der Lastaufnahmevorrichtung relativ zur Laufkatze in den einander entgegengesetzten Hub-Richtungen und/oder in orthogonal zu den Hub-Richtungen ausgerichteten Horizontal-Richtungen und/oder zum Rollen und/oder Nicken und/oder Gieren der Lastaufnahmevorrichtung umfassen.

In einer anderen Ausführungsform gemäß der Erfindung könnte vorgesehen sein, dass die im Feinpositioniermodus der Kransteuerung mittels des Eingabegeräts ansteuerbaren Aktoren des Krans eine Vielzahl unabhängig voneinander ansteuerbarer Hubwerksantriebe zur Feinausrichtung der Lastaufnahmevorrichtung relativ zur Laufkatze in den einander entgegengesetzten Hub-Richtungen und/oder in orthogonal zu den Hub-Richtungen ausgerichteten Horizontal-Richtungen und/oder zum Rollen und/oder Nicken und/oder Gieren der Lastaufnahmevorrichtung umfassen.

Im Feinpositioniermodus der Kransteuerung kann die Lastaufnahmevorrichtung präzise relativ zur Laufkatze positioniert und/oder ausgerichtet werden. Dadurch kann, bei einem mit der Lastaufnahmevorrichtung verbundenen Container, ein präzises Abstellen des Containers an einem vorbestimmten Platz, beispielsweise auf einem bereits vorhandenen Container, erfolgen. Ist kein Container oder eine sonstige Last mit der Lastaufnahmevorrichtung verbunden, so kann eine präzise Positionierung der Lastaufnahmevorrichtung relativ zum Container oder zur sonstigen Last erfolgen, um diesen oder diese mit der Lastaufnahmevorrichtung zu verbinden.

Das Gieren der Lastaufnahmevorrichtung wird in der Fachsprache auch als Skew-Bewegung, das Rollen als List-Bewegung und das Nicken als Trim-Bewegung bezeichnet.

Die einander entgegengesetzten Hub-Richtungen umfassen die Richtung zum Anheben des Containers oder der sonstigen Last in vertikaler Richtung und das Senken des Containers oder der sonstigen Last in eine der Richtung zum Anheben des Containers entgegengesetzte Vertikalrichtung.

Beispielsweise könnte eine Verstellung des Griffstücks des Eingabegeräts in eine der Verschieberichtungen, die orthogonal zur Hauptachse des Griffstücks ausgerichtet sind, zur Eingabe oder Vorgabe einer Verfahrbewegung der Lastaufnahmevorrichtung in eine entsprechende Horizontal-Richtung dienen. Im Weiteren könnte eine Verstellung des Griffstücks in einer Verschieberichtung, welche parallel zur Hauptachse des Griffstücks ausgerichtet ist, zur Eingabe oder Vorgabe einer Verfahrbewegung der Lastaufnahmevorrichtung relativ zur Laufkatze in die einander entgegengesetzten Hub-Richtungen dienen. Weiters könnte eine Verdrehung des Griffstücks um die Hauptachse zur Eingabe oder Vorgabe des Gierens der Lastaufnahmevorrichtung um die Hub-Richtungen dienen. Im Weiteren könnte ein Verschwenken des Griffstücks in die zumindest zwei, insbesondere orthogonal, zueinander ausgerichteten Schwenkrichtungen zur Eingabe oder Vorgabe des Nickens oder Rollens der Lastaufnahmevorrichtung dienen. Dadurch können, insbesondere gleichzeitige, Verfahrbewegungen der Lastaufnahmevorrichtung relativ zur Laufkatze in bis zu sechs voneinander unabhängigen Translations- und Rotationsrichtungen, d.h. in sechs Freiheitsgraden, durch eine Verstellung des Griffstücks relativ zur Ursprungslage, realisiert werden.

Besonders bevorzugt ist vorgesehen, dass in der ersten Schaltstellung des Umschaltelements der Grobpositioniermodus und in der zweiten Schaltstellung des Umschaltelements der Feinpositioniermodus der Kransteuerung aktiviert ist. Dadurch kann der Kranbediener zwischen dem Grobpositioniermodus und dem Feinpositioniermodus wechseln. Es wäre denkbar und möglich, dass auf eine Umschaltung mittels eines Umschaltelements verzichtet wird. Beispielsweise könnte das Eingabegerät ausschließlich zur Feinpositionierung im Feinpositioniermodus der Kransteuerung aktiviert sein und die Positionierung des Krans im Grobpositioniermodus mit einem weiteren Eingabegerät vorgenommen werden.

Im Weiteren bezieht sich die Erfindung auf ein Verfahren zur Steuerung der Verfahrbewegungen eines Krans, insbesondere eines Portalkrans, mittels einer erfindungsgemäßen Kransteuerung, wobei von der Steuerelektronik die elektrischen Signale zur Ansteuerung des zumindest einen Aktors des Krans, in Abhängigkeit von der Verstellung des Griffstücks relativ zur Ursprungslage des Griffstücks in die zumindest zwei, insbesondere orthogonal, zueinander ausgerichteten Schwenkrichtungen und/oder in die zumindest zwei, vorzugsweise drei, voneinander verschiedenen Verschieberichtungen und gegebenenfalls um die Hauptachse, generiert werden. Weitere Verfahrensmerkmale bevorzugter Ausführungsvarianten des Verfahrens ergeben sich aus den Schilderungen der Einrichtungsmerkmale der bevorzugten Varianten.

Weitere Merkmale und Einzelheiten bevorzugter Ausgestaltungsformen der Erfindung werden anhand der in den Figuren dargestellten erfindungsgemäßen Kransteuerung und Ausführungsbeispielen erfindungsgemäßer Krane erläutert. Es zeigen:
- Fig. 1: eine schematische Darstellung einer erfindungsgemäßen Kransteuerung;
- Fig. 2: eine isometrische Darstellung eines Bedienpults mit einem Eingabegerät gemäß Fig. 1;
- Fig. 3: eine Skizze der Bewegungsmöglichkeiten eines Griffstücks des Eingabegeräts gemäß Fig. 2;
- Fig. 4: einen Steuersitz mit zwei Bedienpulten gemäß Fig. 2;
- Fig. 5: eine isometrische Ansicht eines ersten Ausführungsbeispiels eines erfindungsgemäßen Krans;
- Fig. 6: das Detail A der Fig. 5;
- Fig. 7: eine Ansicht auf den in Fig. 5 gezeigten Kran parallel zu einer Längserstreckung der Kranschienen gesehen;
- Fig. 8: eine isometrische Ansicht eines zweiten Ausführungsbeispiels eines erfindungsgemäßen Krans;
- Fig. 9: das Detail B der Fig. 8; und
- Fig. 10: eine isometrische Ansicht eines dritten Ausführungsbeispiels eines erfindungsgemäßen Krans;
- Fig. 11: eine isometrische Darstellung einer Transporteinrichtung des in Fig. 10 dargestellten Krans;
- Fig. 12: eine Ansicht der Transporteinrichtung gemäß Fig. 11 in orthogonal zu Laufkatzenschienen des Krans gesehen, und
- Fig. 13: eine isometrische Darstellung eines vierten Ausführungsbeispiels eines erfindungsgemäßen Krans.

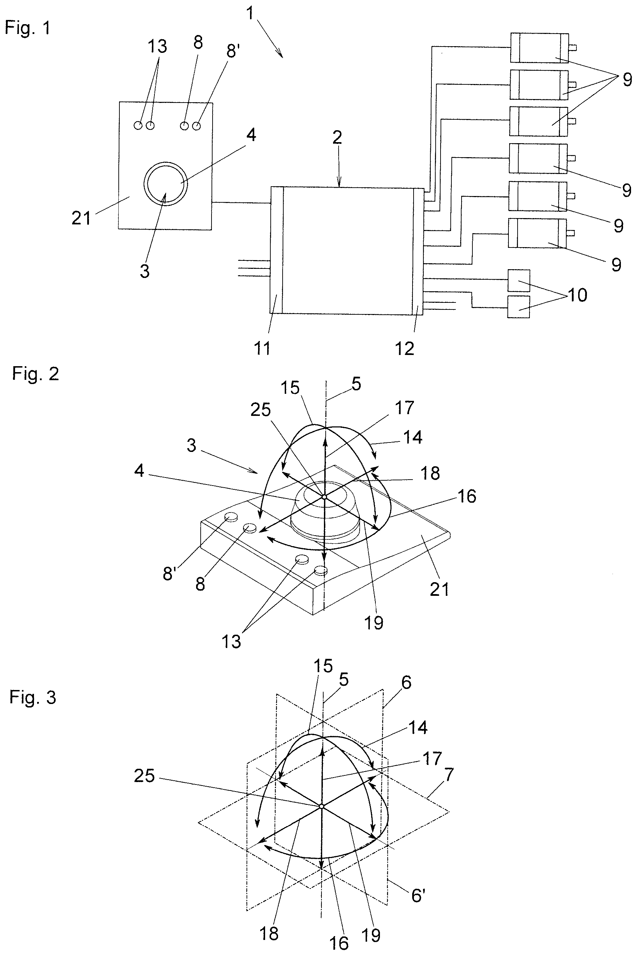

Das in den Fig. 1 bis 3 dargestellte Beispiel einer erfindungsgemäßen Kransteuerung 1 dient zur Steuerung von Verfahrbewegungen eines Krans 30. Die Kransteuerung 1 umfasst eine Steuerelektronik 2. Im gezeigten Ausführungsbeispiel weist die Steuerelektronik 2 Eingänge 11 zur Eingabe von Bedienbefehlen und/oder zum Einlesen von Sensordaten des Krans 30 auf. Die Eingänge 11 könnten auch Kameraeingänge und Ähnliches umfassen, welche einen Kranbediener 24 bei der Bedienung des Krans 30 unterstützen. Im Weiteren weist die Steuerelektronik 2 Ausgänge 12 zur Ansteuerung von symbolisch dargestellten Aktoren 9, 10 des Krans 30 auf. Zusätzlich könnte die Kransteuerung 1 auch, in Fig. 1 nicht näher bezeichnete, Ausgänge zur optischen und/oder akustischen Signalisierung von veränderlichen Informationen des Krans 30, beispielsweise Bildschirme oder Lautsprecher, aufweisen.

Im Ausführungsbeispiel handelt es sich der Steuerelektronik 2 um eine, an sich bekannte, speicherprogrammierbare Steuerung. Auch andere Ausführungsformen der Steuerelektronik 2 sind denkbar und möglich.

In Fig. 1 sind die Aktoren 9, 10 nur schematisch dargestellt. Die Aktoren 9 symbolisieren in Fig. 1 elektrische Antriebe, beispielsweise Getriebemotoren oder Linearantriebe des Krans 30. Die Aktoren 10 symbolisieren beispielhaft Ventile, insbesondere einstellbare Hydraulikventile, welche, wie auch die Aktoren 9 zur Ausführung von Verfahrbewegungen des Krans 30 herangezogen werden.

Die Kransteuerung 1 umfasst ein, mit der Steuerelektronik 2 über eine in Fig. 1 nicht näher bezeichnete Datenverbindung verbundenes, Eingabegerät 3 mit einem beweglichen Griffstück 4. Das Eingabegerät 3 ist im Ausführungsbeispiel auf einem Bedienpult 21 der Kransteuerung 1 angeordnet. Im Weiteren umfasst das Bedienpult 21 Umschaltelemente 8, 8' und Bedienelemente 13. Im Ausführungsbeispiel ist vorgesehen, dass die Umschaltelemente 8, 8' separat vom Eingabegerät 3 auf dem Bedienpult 21 angeordnet sind. Dies könnte in anderen Ausführungsformen auch anders sein. Beispielsweise könnten die Umschaltelemente 8, 8' am Eingabegerät 3, insbesondere am Griffstück 4, angeordnet sein.

Das Griffstück 4 des Eingabegeräts 3 ist im Ausführungsbeispiel vom Kranbediener 24, ausgehend von einer Ursprungslage des Griffstücks 4, in beliebige Richtungen verschiebbar und verschwenkbar. Beim Eingabegerät 3 könnte es sich um eine sogenannte 3-D-Maus handeln. Das Griffstück 4 weist, ausgehend von der Ursprungslage, somit sechs Freiheitsgrade auf. D.h., das Griffstück 4 des Eingabegeräts 3 des Ausführungsbeispiels besitzt, zumindest ausgehend von Ursprungslage, drei Translations-Freiheitsgrade und drei Rotations-Freiheitsgrade.

Im Ausführungsbeispiel ist vorgesehen, dass eine Hauptachse 5 des Griffstücks 4 zusammen mit dem Griffstück 4 um zumindest einen auf der Hauptachse 5 liegenden Kipppunkt in beliebige Richtungen kippbar ist. D.h. die Hauptachse 5 des Griffstücks 4 ist zusammen mit dem Griffstück 4 gleichzeitig in zumindest zwei insbesondere orthogonal zueinander ausgerichteten Schwenkrichtungen 14, 15 verschwenkbar, vgl. Fig. 2 und 3. In anderen Worten ist die Hauptachse 5 des Griffstücks 4 zusammen mit dem Griffstück 4 in beliebige Richtungen verschwenkbar, wobei die Verschwenkung der Hauptachse 5 ausgehend von der in Fig. 2 und 3 dargestellten Ursprungslage des Griffstücks 4, als eine Überlagerung von Verschwenkungen in die orthogonal zueinander ausgerichteten Schwenkrichtungen 14, 15 ausdrückbar ist.

Eine Verschwenkung des Griffstücks 4 in den Schwenkrichtungen 14 erfolgt in zumindest einer Schwenkebene 6, 6' von denen zwei in Fig. 3 dargestellt ist. Eine Verschwenkung des Griffstücks 4 in die orthogonal zu den Schwenkrichtungen 14 liegenden Schwenkrichtungen 15 erfolgt in der Schwenkebene 6'. Die Schwenkebenen 6, 6' sind orthogonal zueinander ausgerichtet und schneiden sich entlang der Hauptachse 5 des Griffstücks 4.

Im Weiteren ist im Ausführungsbeispiel vorgesehen, dass das Griffstück 4 um die Hauptachse 5 drehbar ist. Hierzu sind in Fig. 2 und 3 die Drehrichtungen 16 eingezeichnet.

Die Schwenkrichtungen 14, 15 und die Drehrichtungen 16 beschreiben die drei Rotations-Freiheitsgrade des Griffstücks 4 des Ausführungsbeispiels.

Im Ausführungsbeispiel ist das Griffstück 4 mit der Hauptachse 5 in drei voneinander verschiedenen Verschieberichtungen 17, 18, 19 jeweils hin und her verschiebbar, vgl. Fig. 2 und 3. Die Verschieberichtungen 18 und 19 sind im Ausführungsbeispiel orthogonal zueinander und orthogonal zur Hauptachse 5 ausgerichtet. Die Verschieberichtungen 18 und 19 liegen in einer gemeinsamen Hauptebene 7, die in Fig. 3 eingezeichnet ist. Die Hauptebene 7 ist somit orthogonal zur Hauptachse 5 ausgerichtet.

Die Verschieberichtungen 17 sind im Ausführungsbeispiel parallel zur Hauptachse 5 ausgerichtet.

Die Verschieberichtungen 17, 18 und 19 verlaufen im Ausführungsbeispiel entlang von Schnittgeraden zwischen den Schwenkebenen 6, 6' und der Hauptebene 7, vgl. Fig. 3. Die Verschieberichtungen 17, 18 und 19 beschreiben die drei Translations-Freiheitsgrade des Griffstücks 4 des Ausführungsbeispiels.

Es wird darauf hingewiesen, dass das Griffstück 4 in Fig. 3 nicht eingezeichnet ist, sondern lediglich ein fiktiver Referenzpunkt 25 des Griffstücks 4. Der fiktive Referenzpunkt 25 dient zur übersichtlicheren Darstellung der Bewegungsmöglichkeiten des Griffstücks 4 und ist zur besseren Zuordnung der Bewegungsmöglichkeiten auch in Fig. 2 eingezeichnet. Der fiktive Referenzpunkt 25 liegt in einem Schnittpunkt der Hauptachse 5 mit der Hauptebene 7.

Im Weiteren wird gesondert darauf hingewiesen, dass die Bewegungsmöglichkeiten des Griffstücks 4 des Eingabegeräts 3 des Ausführungsbeispiels nicht auf die in den Fig. 2 und 3 eingezeichneten Schwenkrichtungen 14, 15 und die Drehrichtungen 16 und die Verschieberichtungen 17, 18, 19 beschränkt sind, sondern beliebige Überlagerungen von Bewegungen möglich sind, die in entsprechende Verstellungen des Griffstücks 4 in den genannten Richtungen ausdrückbar sind.

Grundsätzlich könnte man beim in Fig. 2 und 3 gezeigten Ausführungsbeispiel des Eingabegeräts 3 auch davon sprechen, dass die Hauptachse 5 des Griffstücks 4 zusätzlich zu einer beliebigen Verschwenkung aus der Ursprungslage des Griffstücks 4 verschiebbar ist. Weiters ist das Griffstück 4 um die Hauptachse 5 verdrehbar.

Die Hauptachse 5 liegt im Ausführungsbeispiel in der Ursprungslage im Wesentlichen parallel zur Vertikalen. D.h., die Hauptachse 5 weicht um weniger als +/- 10° von der Vertikalen ab.

Das Griffstück 4 weist im Ausführungsbeispiel die Form eines Rotationskörpers auf. Im Ausführungsbeispiel könnte das Griffstück 4 auch als Puck oder als, insbesondere scheibenförmiger, Steuerkörper bezeichnet werden. Das Griffstück 4 ist günstigerweise vom Kranbediener 24 mit einer Hand, insbesondere mit den Fingern der Hand, umgreifbar und bewegbar.

Im Ausführungsbeispiel weist das Griffstück 4 zumindest ein Rückstellelement, beispielsweise zumindest eine mechanische Feder, zur selbsttätigen Rückstellung des Griffstücks 4 in die Ursprungslage aufweist. Durch ein Loslassen des Griffstücks 4 nimmt dieses somit selbsttätig die Ursprungslage ein.

Das Eingabegerät 3 weist nicht näher dargestellte Sensoren zur Erfassung der Verstellung, d.h. der Verdrehungen und Verschiebungen, des Griffstücks 4 aus der Ursprungslage des Griffstücks 4 in die Schwenkrichtungen 14, 15 und die Drehrichtungen 16 und die Verschieberichtungen 17, 18, 19 auf. Beispielsweise könnten die Sensoren Potentiometer oder opto-elektronische Sensoren sein. Derartige Sensoren sind bei Eingabegeräten für Computer hinlänglich bekannt. Die von den Sensoren gemessenen Messwerte, welche das Ausmaß der Verstellung des Griffstücks 4 relativ zur Ursprungslage 4 beschreiben, sind von der Steuerelektronik 2 einlesbar.

Im Weiteren sind von der Steuerelektronik 2 elektrische Signale zur Ansteuerung der Aktoren 9, 10 des Krans 30, in Abhängigkeit von der Verstellung des Griffstücks 4 relativ zur Ursprungslage in die Schwenkrichtungen 14, 15 und die Drehrichtungen 16 und die Verschieberichtungen 17, 18, 19 generierbar.

Dies wird nun allgemein anhand eines einfachen Beispiels auf Basis der Fig. 3 erläutert. In diesem Beispiel könnte vorgesehen sein, dass eine Verstellung des Griffstücks 4 in eine der zuvor erwähnten Verschieberichtungen 18, 19 zur Ansteuerung eines der Aktoren 9 und eine Verschiebung in die andere der Verschieberichtungen 18, 19 zur Ansteuerung eines weiteren Aktors 9 herangezogen wird. Durch eine kombinierte Verstellung des Griffstücks in der Hauptebene 7, in welcher die Verschieberichtungen 18, 19 liegen, werden von der Steuerelektronik 2 elektrische Signale für beide Aktoren 9 in Abhängigkeit vom Ausmaß der Verstellung des Griffstücks 4 in die Verschieberichtungen 18, 19 generiert. Beträgt das Ausmaß der Verstellung in der Hauptebene 7 in eine der Verschieberichtungen 18, 19 gleich Null, so wird auch günstigerweise der zugeordnete Aktor 9 nicht angetrieben, usw.

Die Aktoren 9 dieses einfachen Beispiels sind somit unabhängig voneinander ansteuerbar.

Gedanklich könnte man das Ausmaß der Verstellung des Griffstücks 4 auch als Vektor und/oder Tensor ansehen. Um beim Beispiel einer einfachen zweidimensionalen Verschiebung des Griffstücks 4 in der Hauptebene 7 zu bleiben, könnte eine Verstellung des Griffstücks in der Hauptebene 7 durch eine Zerlegung des Vektors, welcher die Verschiebung des Griffstücks 4 beschreibt, in Vektorkomponenten, die parallel zu den Verschieberichtungen 18, 19 liegen, ausgedrückt bzw. von den Sensoren des Eingabegeräts 3 gemessen werden. Aus den Messwerten ermittelt die Steuerelektronik 2 wiederum die entsprechenden elektrischen Signale zur Ansteuerung der zuvor erwähnten Aktoren 9.

Dieses Beispiel kann entsprechend auf eine, insbesondere kombinierte, Verschwenkung in die Schwenkrichtungen 14, 15 und/oder eine Verdrehung des Griffstücks 4 um die Hauptachse 5 und/oder eine Verschiebung des Griffstücks parallel zur Hauptachse 5 in die Verschieberichtung 17 übertragen werden. So könnten beispielsweise sechs voneinander unabhängige Aktoren des Krans 30 angesteuert werden.

Im in den Figuren 1 bis 3 gezeigten Ausführungsbeispiel der Kransteuerung 1 ist vorgesehen, dass ein Geschwindigkeitswert des zumindest einen Aktors 9, 10 von der Steuerelektronik 2 variierbar ist und der Geschwindigkeitswert von der Steuerelektronik 2 in Abhängigkeit von einem Ausmaß der Verstellung des Griffstücks 4 ausgehend von der Ursprungslage des Griffstücks 4 einstellbar ist.

Im Ausführungsbeispiel ist vorgesehen, dass die Geschwindigkeitswerte der mit dem Eingabegerät 3 bzw. der Steuerelektronik 2 ansteuerbaren Aktoren 9, 10 in der Ursprungslage gleich Null betragen. Beispielsweise könnten die Aktoren 9 Elektromotoren umfassen, welche drehzahlvariabel, beispielsweise durch einen Frequenzumrichter, ansteuerbar ist. Dadurch kann eine präzise Eingabe bzw. Vorgabe von Verfahrbewegungen des Krans 30 realisiert werden. Die Aktoren 10 könnten beispielsweise einstellbare Hydraulikventile sein, wobei ein Volumenstrom des Hydraulikventils in Abhängigkeit vom Ausmaß der Verstellung des Griffstücks 4 einstellbar ist.

Im Ausführungsbeispiel der Kransteuerung 1 ist vorgesehen, dass ein jeweiliges Umschaltelement 8, 8' zwischen einer ersten und zweiten Schaltstellung umschaltbar ist. Im Ausführungsbeispiel umfasst das Umschaltelement 8, 8' jeweils einen Schalter. Durch Umschalten des Umschaltelements 8, 8' können verschiedene der Aktoren 9, 10 mit dem Eingabegerät 3 angesteuert werden. Dies ist insbesondere zur Realisierung unterschiedlicher Betriebsmodi des Krans 30 vorteilhaft. Beispielsweise könnte in der ersten Schaltstellung des Umschaltelements 8 ein Grobpositioniermodus und in der zweiten Schaltstellung ein Feinpositioniermodus der Kransteuerung 1 aktiviert sein. Mit dem weiteren Umschaltelement 8' könnten weitere Betriebsmodi der Kransteuerung 1 aktivierbar sein. Auf die Bedeutung des Grobpositioniermodus und des Feinpositioniermodus wird noch im Zuge der Erläuterungen zu den folgenden Anwendungsbeispielen der Kransteuerung 1 bei den erfindungsgemäßen Kranen 30 eingegangen. Grundsätzlich wäre es denkbar, dass die Zuordnung von Aktoren 9, 10 zu den Verschieberichtungen 17 - 19 bzw. zu den Schwenkrichtungen 14, 15 und zu den Drehrichtungen 16 individuell an die Bedürfnisse des Kranbedieners anpassbar ist.

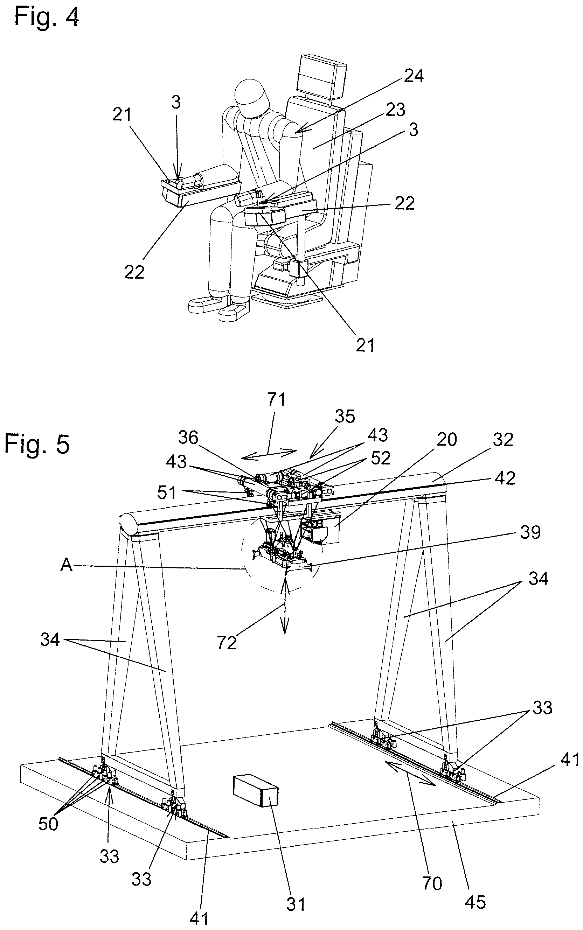

In Fig. 4 ist noch ein Beispiel für einen möglichen Arbeitsplatz des Kranbedieners 24 des Krans 30 dargestellt. Der Arbeitsplatz umfasst einen Steuersitz 23 für den Kranbediener 24. Der Steuersitz 23 weist zwei Armlehnen 22 auf, auf welchen jeweils ein Bedienpult 21 gemäß Fig. 2 angeordnet ist. Der Kranbediener 24 kann nach seinen Bedürfnissen, beispielsweise bei Bevorzugung einer bestimmten Hand zur Bedienung des Krans 30, den Kran 30 mit einem der beiden Bedienpulte 21 bedienen. Es ist aber auch denkbar und möglich, dass die zwei Bedienpulte 21 vom Kranbediener 24 gleichzeitig benutzt werden. Der in Fig. 4 dargestellte Arbeitsplatz des Kranbedieners 24 könnte, wie dies auch in den noch zu erläuternden Ausführungsbeispielen erfindungsgemäßer Krane 30 bevorzugt ist, in einer Steuerkabine 20 des Krans 30 angeordnet sein, vgl. z.B. Fig. 5. Die Steuerelektronik 2 kann in der Steuerkabine 20 oder außerhalb der Steuerkabine 20 am Kran 30 angeordnet sein.

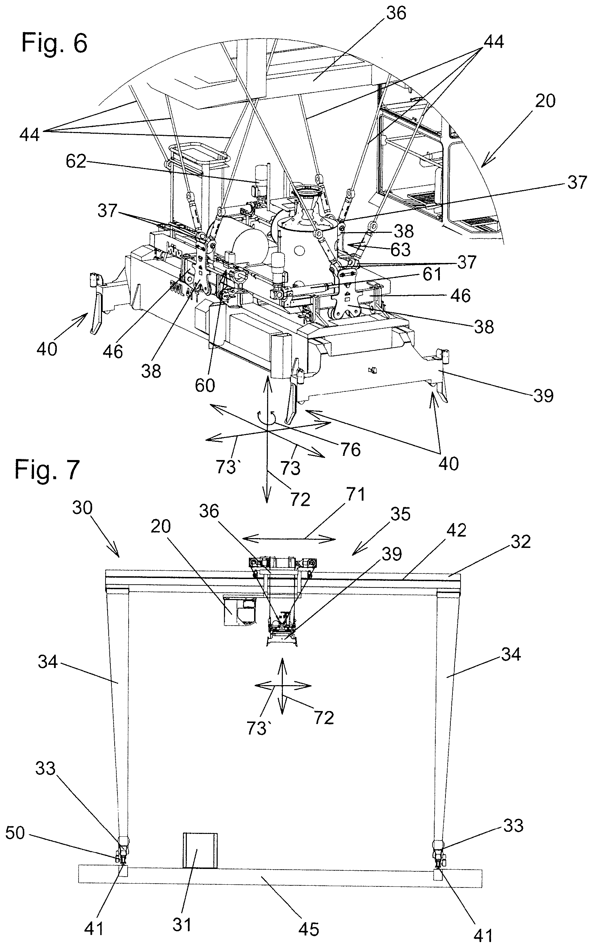

Im Folgenden wir nun auf ein erstes Anwendungsbeispiel der erfindungsgemäßen Kransteuerung 1 bei einem als Portalkran ausgeführten erfindungsgemäßen Kran 30 eingegangen. Der Kran 30 weist einen Kranträger 32 auf, welcher sich über Steher 34 auf Fahrwerken 33 des Krans 30 abstützt. Der Kranträger 32 überspannt einen Bereich zum Umschlag von Containern 31, beispielsweise eine Containerabstellfläche eines Container-Terminals. In Fig. 5 und 7 ist jeweils nur ein Container 31 dargestellt.

Die Fahrwerke 33 stützen sich auf Kranschienen 41 ab, welche auf einem Untergrund 45 verlegt sind. Der Kran 30 ist im Ausführungsbeispiel als Ganzes in einander entgegengesetzte Kran-Fahrrichtungen 70 entlang der Kranschienen 41 bewegbar. Jedes der Fahrwerke 33 weist im Ausführungsbeispiel vier Fahrantriebe 50 zum Antreiben von nicht näher bezeichneten Kranlaufrädern an. Durch eine Ansteuerung der Fahrantriebe 50 kann der Kran 30 mit dem Kranträgers 32 in die einander entgegengesetzten Kran-Fahrrichtungen 70 verfahren werden, vgl. Fig. 5.

Im Weiteren weist der Kran 30 eine Transporteinrichtung 35 mit einer Laufkatze 36 auf. Die Laufkatze 36 ist auf dem Kranträger 32 verschiebbar gelagert. Die Laufkatze 36 stützt mittels nicht näher bezeichneten Laufkatzen-Fahrwerken auf am Kranträger 32 angeordneten Laufkatzenschienen 42 ab. Die Laufkatze 36 weist im Ausführungsbeispiel vier Laufkatzenantriebe 51 zum Bewegen der Laufkatze 36 entlang des Kranträgers 32 in einander entgegengesetzte Laufkatzen-Bewegungsrichtungen 71 auf.

Die Steuerkabine 20 des Krans 30 ist an der Laufkatze 36 befestigt.

Die Transporteinrichtung 35 umfasst eine Lastaufnahmevorrichtung 39, welche mittels Seilen 44 heb- und senkbar an der Laufkatze 36 hängt. Die Seile 44 sind auf an der Laufkatze 36 verdrehbar gelagerten Seiltrommel 43 auf- und abwickelbar. Die Transporteinrichtung 35 weist im ersten Anwendungsbeispiel zwei Hubwerksantriebe 52 zum Verdrehen der Seiltrommeln 43, und damit zum Bewegen der Lastaufnahmevorrichtung 39 relativ zur Laufkatze 36 in einander entgegengesetzte Hub-Richtungen 72, auf. Jeweils zwei der Seiltrommeln 43 sind mittels nicht näher bezeichneten Getrieben mit einem der Hubwerksantriebe 52 antreibbar.

In Fig. 5 sind die möglichen Verfahrbewegungen des Krans 30 im Grobpositioniermodus der Kransteuerung 1 dargestellt. Die mittels des Eingabegeräts 3 ansteuerbaren Aktoren des Krans 30 umfassen somit die Fahrantriebe 50 zum Bewegung des Krans 30 in die einander entgegengesetzten Kran-Fahrrichtungen 70 und die Laufkatzenantriebe 51 zum Bewegen der Laufkatze 36 in die einander entgegengesetzten Laufkatzen-Bewegungsrichtungen 71 und die Hubwerksantriebe 52 zum Bewegen der Lastaufnahmevorrichtung 39 in die einander entgegengesetzten Hub-Richtungen 72. Im Grobpositioniermodus können vom Kran 30 und von der Laufkatze 36 und von der Lastaufnahmevorrichtung 39 große Wegstrecken in kurzer Zeit zurückgelegt werden.

Im ersten Ausführungsbeispiel ist vorgesehen, dass im Grobpositioniermodus lediglich Verschiebungen des Griffstücks 4 des Eingabegeräts 3, d.h. translatorische Verstellungen des Griffstücks 4, in die Verschieberichtungen 17, 18, 19 von der Steuerelektronik 2 der Kransteuerung 1 zur Ansteuerung der Fahrantriebe 50 und der Laufkatzenantriebe 51 und der Hubwerksantriebe 52 herangezogen werden. Verschwenkungen des Griffstücks 4 in die Schwenkrichtungen 14, 15 oder Verdrehungen des Griffstücks 4 um die Hauptachse 5 bleiben im ersten Ausführungsbeispiel im Grobpositioniermodus von der Steuerelektronik 2 unberücksichtigt.

Im ersten Ausführungsbeispiel ist im Grobpositioniermodus vorgesehen, dass die Verstellung des Griffstücks 4 in die Verschieberichtungen 19 zu einer Bewegung des Krans 30 in die einander entgegengesetzten Kran-Fahrrichtungen 70 umgesetzt werden. Dabei werden von der Steuerelektronik 2 alle Fahrantriebe 50 der Fahrwerke 33 in Abhängigkeit vom Ausmaß der Verstellung des Griffstücks 4 in die Verschieberichtungen 19 gleichzeitig, insbesondere synchron, angesteuert.

Eine Verstellung des Griffstücks 4 in die Verschieberichtungen 18 dient zum Verfahren der Laufkatze 36 mittels der Laufkatzenantriebe 51 entlang des Kranträgers 32 in die einander entgegengesetzte Laufkatzen-Bewegungsrichtungen 71. Analog führt eine Verstellung des Griffstücks 4 in die Verschieberichtungen 17 zur Relativbewegung der Lastaufnahmevorrichtung 39 relativ zur Laufkatze 36 in die einander entgegengesetzten Hub-Richtungen 72.

Eine Verstellung des Griffstücks 4, welche Verstellkomponenten in die genannten Verschieberichtungen 17, 18, 19 aufweist, kann zu einer überlagerten Bewegung des Krans 30 und der Laufkatze 36 und der Lastaufnahmevorrichtung 39 herangezogen werden, wie dies auch bevorzugt ist. D.h., dass gleichzeitig die drei voneinander unabhängigen Aktoren des Krans 30, d.h. die Fahrantriebe 50 und die Laufkatzenantrieb 51 und die Hubwerksantriebe 52 antreibbar sind. Dadurch kann eine intuitive Bedienung des Krans 30 mittels der Kransteuerung 1 gemäß der Erfindung realisiert werden.

Im Grobpositioniermodus erfolgt eine grobe Positionierung des Krans 30 und der Laufkatze 36 und der Lastaufnahmevorrichtung 39. Aufgrund der großen bewegten Massen, u.a. wird das Eigengewicht des Krans 30 bei der Positionierung im Grobpositioniermodus beschleunigt oder verzögert, ist die Genauigkeit der Positionierung begrenzt.

Der in den Fig. 5-7 dargestellte Kran 30 weist zusätzlich eine Feinpositioniereinrichtung zur Feinausrichtung der Lastaufnahmevorrichtung 39 relativ zur Laufkatze 36 auf. Mit der Feinpositioniereinrichtung kann eine präzise Positionierung der Lastaufnahmevorrichtung 39 zur Aufnahme eines Containers 31 oder zum Abstellen eines Containers 31 erreicht werden. Im Stand der Technik sind unterschiedliche Feinpositioniereinrichtungen bekannt.

Im ersten Ausführungsbeispiel des Krans 30 ist vorgesehen, dass von der Seiltrommel 43 abgewandte Seilangriffspunkte 37 der Seile 44 relativ zur Lastaufnahmevorrichtung 39 verschiebbar sind, vgl. Fig. 6. Der jeweilige Seilangriffspunkt 37 könnte im ersten Ausführungsbeispiel des Krans 30 auch als Seilverankerungspunkt bezeichnet werden. Seilverankerungen dienen zur Befestigung oder Verankerung eines Endes eines Seils an einem Bauteil und sind im Stand der Technik hinlänglich bekannt. Jeweils zwei der acht Seile 44 greifen im ersten Ausführungsbeispiel an einem Verschiebeglied 38 der Transporteinrichtung 35 an.

Die Lastaufnahmevorrichtung 39 weist zwei einander gegenüberliegende Längsseiten und zwei orthogonal zu den Längsseiten ausgerichtete, einander gegenüberliegende Stirnseiten auf. Diese sind in den Figuren nicht näher bezeichnet. Die Längsseiten weisen gegenüber den Stirnseiten, bezogen auf orthogonal zueinander ausgerichtete horizontale Richtungen, eine größere Ausdehnung auf. Im ersten Ausführungsbeispiel sind die Längsseiten der Lastaufnahmevorrichtung 39 parallel zu einer Horizontal-Richtung 73 und die Stirnseiten parallel zu einer Horizontal-Richtungen 73' ausgerichtet. Die Horizontal-Richtungen 73 liegen parallel zu den einander entgegengesetzten Kran-Fahrrichtungen 70, vgl. Fig. 5 und 6. Die Horizontal-Richtungen 73' sind parallel zu den einander entgegengesetzten Laufkatzen-Bewegungsrichtungen 71 ausgerichtet.

Die Lastaufnahmevorrichtung 39 weist an jeder der Längsseiten und Stirnseiten jeweils eine parallel zur jeweiligen Längsseite bzw. Stirnseite ausgerichtete Führungsschiene 46 auf, an welcher jeweils eines der Verschiebeglieder 38 verschiebbar gelagert ist.

Im ersten Ausführungsbeispiel des erfindungsgemäßen Krans 30 weist die Feinpositioniereinrichtung Feinpositionierantriebe 60 - 63 auf, wobei jeweils einer der Feinpositionierantriebe 60 - 63 einem der Verschiebeglieder 38 zugeordnet ist und zur Verschiebung des jeweiligen Verschiebeglieds 38 entlang der jeweiligen Führrungschiene 46 dient.

Im Feinpositioniermodus der Kransteuerung 1 sind die Feinpositionierantriebe 60 - 63 von der Steuerelektronik 2, zur Feinausrichtung der Lastaufnahmevorrichtung 39 relativ zur Laufkatze 36 in die orthogonal zu den Hub-Richtungen 72 ausgerichteten Horizontal-Richtungen 73, 73', ansteuerbar. Eine Bewegung der Lastaufnahmevorrichtung 39 in die Horizontal-Richtungen 73 kann beispielsweise durch ein Verschieben der auf den Längsseiten der Lastaufnahmevorrichtung 39 angeordneten Verschiebegliedern 38 hervorgerufen werden, wobei dann die Antriebe 60 und 63 von der Steuerelektronik 2 angetrieben werden. Eine Verschiebung in die Horizontal-Richtungen 73' erfolgt durch ein Verschieben der an den Stirnseiten der Lastaufnahmevorrichtung 39 angeordneten Verschiebegliedern 38 durch ein Ansteuern der Feinpositionierantriebe 61, 62 mittels der Steuerelektronik 2.

Im Weiteren ist mittels der Feinpositionierantriebe 60 - 63 ein Gieren der Lastaufnahmevorrichtung 39, d.h. eine Verdrehung der Lastaufnahmevorrichtung 39 um die Hub-Richtungen 72, d.h. die Vertikale, realisierbar. Zur besseren Darstellung dieser Bewegungsmöglichkeit sind in Fig. 6 die Gierrichtungen 76 eingezeichnet.

Im Feinpositioniermodus der Kransteuerung 1 ist im ersten Ausführungsbeispiel des Krans 30 vorgesehen, dass zusätzlich zu den Feinpositionierantrieben 60 - 63 auch die Hubwerksantriebe 52 ansteuerbar sind. Dabei ist es günstig, wenn die Verfahrgeschwindigkeit der Hubwerksantriebe 52 im Feinpositioniermodus kleiner ist als im Grobpositioniermodus. Dadurch kann eine präzise und feinfühlige Positionierung der Lastaufnahmevorrichtung 39 in den einander entgegengesetzten Hub-Richtungen 72, d.h. in der Vertikalen, eingegeben bzw. vorgegeben werden.

Im ersten Ausführungsbeispiel des Krans 30 ist im Feinpositioniermodus vorgesehen, dass eine Verstellung des Griffstücks 4 in die Verschieberichtungen 19 von der Steuerelektronik 2 in eine Bewegung der Lastaufnahmevorrichtung 39 in die Horizontal-Richtungen 73 umgesetzt wird. Dabei werden von der Steuerelektronik 2 die an der Längsseite der Lastaufnahmevorrichtung 39 angeordneten Feinpositionierantriebe 60 und 63 in Abhängigkeit vom Ausmaß der Verstellung des Griffstücks 4 in die Verschieberichtungen 19 angesteuert. In analoger Weise ist eine Verstellung des Griffstücks 4 in die Verschieberichtungen 18 von der Steuerelektronik 2 in eine Bewegung der Lastaufnahmevorrichtung 39 in die Horizontal-Richtungen 73' umsetzbar. Analog führt eine Verstellung des Griffstücks 4 in die Verschieberichtungen 17 zur Relativbewegung der Lastaufnahmevorrichtung 39 relativ zur Laufkatze 36 in die einander entgegengesetzten Hub-Richtungen 72. Im Weiteren führt eine Verdrehung des Griffstücks 4 um die Hauptachse 5 zu einem Gieren der Lastaufnahmevorrichtung 39.

Eine Verstellung des Griffstücks 4, welche Verstellkomponenten in die genannten Verschieberichtungen 17 - 19 und eine Verdrehung um die Haupt-Achse 5 aufweist, kann zu einer überlagerten Bewegung der Lastaufnahmevorrichtung 39 relativ zur Laufkatze 36 herangezogen werden, wie dies auch bevorzugt ist.

Die Umschaltung zwischen dem Feinpositioniermodus und dem Grobpositioniermodus der Kransteuerung 1 erfolgt im Ausführungsbeispiel mit dem zuvor schon erläuterten Umschaltelement 8, wobei in der ersten Schaltstellung der Grobpositioniermodus und in der zweiten Schaltstellung der Feinpositioniermodus der Kransteuerung 1 aktiviert ist.

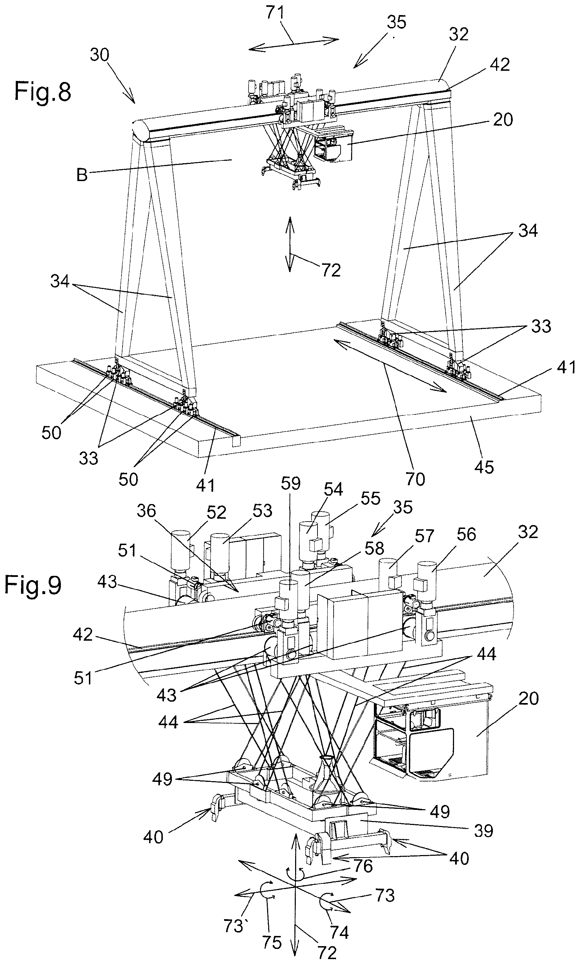

In den Fig. 8 und 9 ist ein zweites Ausführungsbeispiel eines Krans 30 mit einer Kransteuerung 1 gemäß der Erfindung dargestellt. Der strukturelle Aufbau des Krans 30 entspricht, abgesehen von Details der Transporteinrichtung 35, weitestgehend jenem des in den Fig. 5 bis 7 dargestellten Ausführungsbeispiels, sodass in den Erläuterungen zum zweiten Ausführungsbeispiel hauptsächlich auf die Unterschiede zum ersten Ausführungsbeispiel des Krans 30 hingewiesen wird. Abgesehen von den im Folgenden angeführten Unterschieden gelten die Erläuterungen zum ersten Ausführungsbeispiel des Krans 30 somit auch beim zweiten Ausführungsbeispiel.

Ein Unterschied des zweiten Ausführungsbeispiels des Krans 30 liegt darin, dass die Seile 44 jeweils auf einer eigenen Seiltrommel 43 aufwickelbar sind, wobei bei allen Seiltrommeln 43 die Drehzahl und/oder die Drehrichtung jeweils individuell einstellbar ist. Hierzu weist die Transporteinrichtung 35 acht Hubwerksantriebe 52 - 59 zum individuellen Antreiben der Seiltrommeln 43 auf. Die Seile 44 werden jeweils an, an der Lastaufnahmevorrichtung 39 angeordneten, Umlenkrollen 49 umgelenkt. Das von der Seiltrommel abgewandte Ende eines jeweiligen Seils 44 ist an der Laufkatze 36 verankert. Dies ist in den Figuren nicht gesondert dargestellt.

Die Lastaufnahmevorrichtung 39 weist im zweiten Ausführungsbeispiel in Bezug auf die Laufkatze 36 sechs Freiheitsgrade auf, wobei eine Bewegung der Lastaufnahmevorrichtung 39 in die Hub-Richtungen 72 und die Horizontal-Richtungen 73, 73' und Verdrehungen der Lastaufnahmevorrichtung 39 um die Hub-Richtungen 72 und um die Horizontal-Richtungen 73, 73' ausschließlich durch ein entsprechendes Auf- und Abwickeln der Seile 44 auf der jeweiligen Seiltrommel 43 erfolgt.

Im Grobpositioniermodus der Kransteuerung 1 umfassen die mittels des Eingabegeräts 3 ansteuerbaren Aktoren des Krans, analog zum ersten Ausführungsbeispiel, die Fahrantriebe 50 zum Bewegen des Krans 30 in einander entgegengesetzte Kran-Fahrrichtungen 70 und die Laufkatzenantriebe 51 zum Bewegen der Laufkatze 36 entlang des Kranträgers 32 in einander entgegengesetzte Laufkatzen-Bewegungsrichtungen 71.

Auch beim zweiten Ausführungsbeispiel ist vorgesehen, dass in Grobpositioniermodus der Kransteuerung 1 die Hubwerksantriebe 52 - 59 zum Bewegen der Lastaufnahmevorrichtung 39 relativ zur Laufkatze 36 in einander entgegengesetzte Hub-Richtungen 72 ansteuerbar sind. Im Grobpositioniermodus ist dabei vorgesehen, dass alle Hubwerksantriebe 52 - 59 synchron angesteuert werden, sodass ausschließlich eine Bewegung der Lastaufnahmevorrichtung 39 relativ zur Laufkatze 36 in den einander entgegengesetzten Hub-Richtungen 72 erfolgt.

Im Feinpositioniermodus der Kransteuerung ist vorgesehen, dass die mittels des Eingabegeräts 3 ansteuerbaren Aktoren des Krans 30 alle Hubwerksantriebe 52 - 59 umfassen, wobei die Hubwerksantriebe 52 - 59 zur Feinausrichtung der Lastaufnahmevorrichtung 39 relativ zur Laufkatze 36 unabhängig voneinander ansteuerbar sind, wie dies bereits angedeutet wurde.

Durch die individuelle Ansteuerung der Hubwerksantriebe 52 - 59 ist die Lastaufnahmevorrichtung 39 in orthogonal zu den Hub-Richtungen 72 ausgerichteten Horizontal-Richtungen 73, 73' und in den einander entgegengesetzten Hub-Richtungen 72 bewegbar. Die Bewegung in den einander entgegengesetzten Hub-Richtungen 72 erfolgt dabei wiederum durch ein synchrones Ansteuern aller Hubwerksantriebe 52 - 59, wobei vorgesehen ist, dass die höchste Verfahrgeschwindigkeit im Feinpositioniermodus kleiner ist als im Grobpositioniermodus. Im Weiteren ist auch ein Rollen und Nicken und Gieren der Lastaufnahmevorrichtung 39 durch die individuelle Einstellung der Drehzahl und/oder der Drehrichtung der Seiltrommeln 43 möglich, wobei die freie Seillänge der Seile 44 individuell eingestellt wird.

Unter Bezugnahme auf die Fig. 2 und 3 kann dabei vorgesehen sein, dass zur Ausführung einer Bewegung der Lastaufnahmevorrichtung 39 in die einander entgegengesetzten Hub-Richtungen 72 eine Verstellung des Griffstücks 4 parallel zur Hauptachse 5 erfolgt. Ein Verschwenken des Griffstücks 4 in die Schwenkrichtung 14 kann entsprechend in eine Rollbewegung der Lastaufnahmevorrichtung 39 um die Horizontal-Richtung 73 umgesetzt werden, wobei dann ein Verdrehen der Lastaufnahmevorrichtung 39 in den Rollrichtungen 74 erfolgt, vgl. Fig. 9. Ein Nicken der Lastaufnahmevorrichtung 39 in den Nickrichtungen 75 erfolgt dann beispielsweise durch ein Verschwenken des Griffstücks 4 in den Schwenkrichtungen 15. Eine Verdrehung des Griffstücks 4 führt zu einem Gieren der Lastaufnahmevorrichtung 39 in den Gierrichtungen 76 usw.

Dadurch kann der Kranbediener 24 mit einer Hand die Feinpositionierung der Lastaufnahmevorrichtung 39 bezüglich der sechs Freiheitsgrade der Lastaufnahmevorrichtung 39 vornehmen. Das hat den Vorteil, dass Translationsbewegungen des Griffstücks 4 direkt von der Kransteuerung 1 in Translationsbewegungen der Lastaufnahmevorrichtung 39 umsetzbar sind.

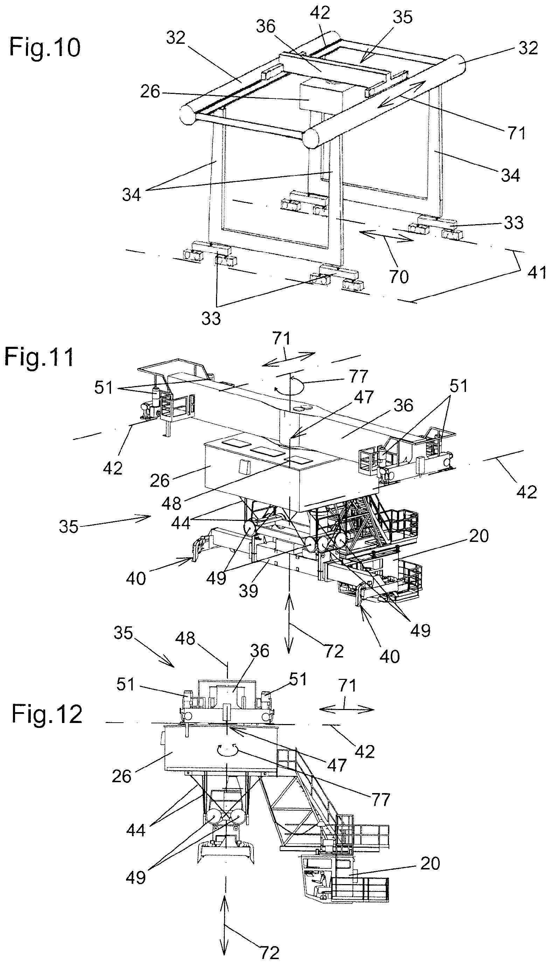

In den Fig. 10 bis 12 ist ein drittes Ausführungsbeispiel eines Krans 30 mit einer Kransteuerung 1 gemäß der Erfindung dargestellt. Der Aufbau des Krans 30 und insbesondere der Grobpositioniermodus entspricht weitestgehend jenem des in den Fig. 5 bis 7 dargestellten ersten Ausführungsbeispiels, sodass in den Erläuterungen zum dritten Ausführungsbeispiel hauptsächlich auf die Unterschiede zum ersten Ausführungsbeispiel des Krans 30 hingewiesen wird. Abgesehen von den im Folgenden angeführten Unterschieden gelten die Erläuterungen zum ersten Ausführungsbeispiel des Krans 30 somit auch beim dritten Ausführungsbeispiel.

In Fig. 10 ist eine isometrische Ansicht des Krans 30 des dritten Ausführungsbeispiels gezeigt. Im Unterschied zu den ersten beiden Ausführungsbeispielen weist der Kran 30 zwei Kranträger 32 auf, wobei sich die Transporteinrichtung 35 jeweils auf einer auf dem jeweiligen Kranträger 32 angeordneten Laufkatzenschiene 42 abstützt. Der Kran 30 des dritten Ausführungsbeispiels könnte auch als Zweiträgerkran bezeichnet werden. Krane 30 mit zwei Kranträgern 32 sind hinlänglich bekannt. In Fig. 10 ist die Lastaufnahmevorrichtung 39 nicht eingezeichnet.

In den Fig. 11 und 12 ist die Transporteinrichtung 35 des Krans 30 dargestellt. Die Transporteinrichtung 35 weist wiederum Laufkatzenantriebe 51 zum Verfahren der Laufkatze 36 entlang der Kranträger 32 in einander entgegengesetzten Laufkatzen-Bewegungsrichtungen 71 auf. Die Laufkatzenschienen 42 sind in Fig. 11 und 12 nur strichpunktiert angedeutet. Im Weiteren umfasst die Transporteinrichtung 35 eine Hubwerksanordnung 26, welche ein Gehäuse zum Schutz der in den Figuren nicht sichtbaren Hubwerksantriebe aufweist. Die Hubwerksantriebe sind analog zum ersten Ausführungsbeispiel des Krans 30 ausgeführt. Abweichend vom ersten Ausführungsbeispiel sind die Seile 44 mittels Umlenkrollen 49, analog zum zweiten Ausführungsbeispiel, an der Lastaufnahmevorrichtung 39 umgelenkt. In einer anderen Ausführungsform wäre es aber auch möglich, dass die Hubwerksantriebe analog zum zweiten Ausführungsbeispiel ausgeführt sind.

Die Transporteinrichtung 35 umfasst im dritten Ausführungsbeispiel des erfindungsgemäßen Krans 30 ein Drehwerk 47 zum Verdrehen der Hubwerksanordnung 26 relativ zur Laufkatze 36 um eine Drehachse 48. Die Drehachse 48 liegt parallel zur Vertikalen, d.h. parallel zu den Hub-Richtungen 72.

Drehwerke 47 sind im Kranbau, insbesondere bei Portalkranen, bekannt. Das Drehwerk 47 weist einen nicht dargestellten Drehwerkantrieb auf. Beispielsweise könnte das Drehwerk 47 einen Zahnkranz und einen Getriebemotor mit zumindest einem den Zahnkranz kämmenden Ritzel aufweisen. Durch ein Verdrehen der Hubwerksanordnung 26 wird auch die Lastaufnahmevorrichtung 39 relativ zur Laufkatze 36 verdreht.

Im Grobpositioniermodus der Kransteuerung 1 ist im dritten Ausführungsbeispiel des Krans 30 vorgesehen, dass der Kran 30 in die einander entgegengesetzten Kran-Fahrrichtungen 70 und die Laufkatze 36 in die einander entgegengesetzten Laufkatzen-Bewegungsrichtungen 71 und die Lastaufnahmevorrichtung 39 in die einander entgegengesetzten Hub-Richtungen 72 bewegbar ist. Hierzu wird insbesondere auf die Erläuterungen zum ersten Ausführungsbeispiel des Krans 30 verwiesen.

Im dritten Ausführungsbeispiel ist im Grobpositioniermodus zusätzlich vorgesehen, dass die Hubwerksanordnung 26 mit der Lastaufnahmevorrichtung 39 um die Drehachse 48 verdrehbar ist. Hierzu sind in Fig. 11 und 12 die Drehrichtungen 77 eingezeichnet. D.h. der Drehwerkantrieb des Drehwerks 47 ist im Grobpositioniermodus von der Steuerelektronik 2, zur Verdrehung der Lastaufnahmevorrichtung 39 relativ zur Laufkatze 36 um die Drehachse 48 ansteuerbar.

Im dritten Ausführungsbeispiel ist im Grobpositioniermodus somit vorgesehen, dass eine Verdrehung des Griffstücks 4 um die Hauptachse 5 zu einer Verdrehung der Lastaufnahmevorrichtung 39 relativ zur Laufkatze um die Drehachse 48 umgesetzt wird. Dabei wird von der Steuerelektronik 2 der Drehwerkantrieb des Drehwerks 47 in Abhängigkeit vom Ausmaß der Verdrehung des Griffstücks 4 um die Hauptachse 5 angesteuert.

In den Figuren 10 - 12 zum dritten Ausführungsbeispiel sind keine Feinpositionierantriebe eingezeichnet. Die Feinpositionierung könnte aber analog zum ersten Ausführungsbeispiel oder, wenn die Hubwerksantriebe analog zum zweiten Ausführungsbeispiel ausgeführt sind, auch entsprechend dem zweiten Ausführungsbeispiel realisiert sein.

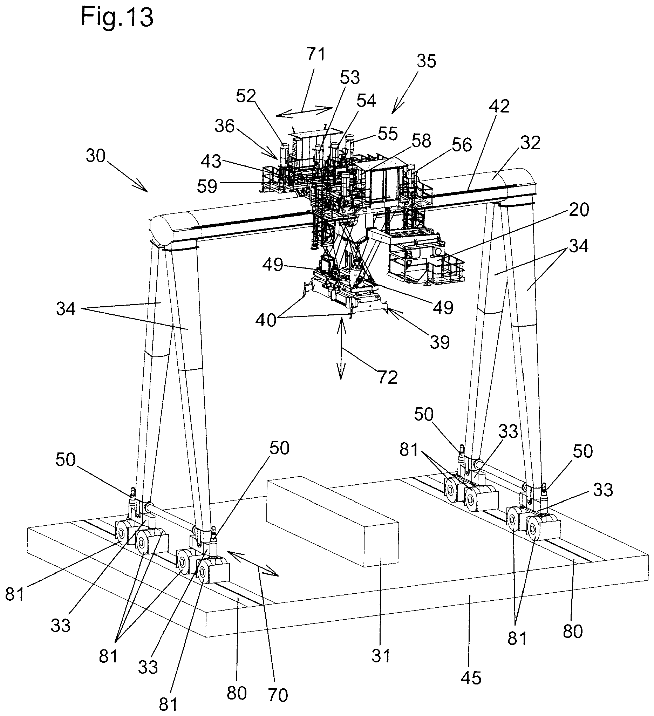

In Fig. 13 ist ein viertes Ausführungsbeispiel eines Krans 30 mit einer Kransteuerung 1 gemäß der Erfindung dargestellt. Der Aufbau des Krans 30 und insbesondere der Feinpositioniermodus entspricht weitgehend jenem des in den Fig. 8 und 9 dargestellten zweiten Ausführungsbeispiels, sodass in den Erläuterungen zum dritten Ausführungsbeispiel hauptsächlich auf die Unterschiede zum zweiten Ausführungsbeispiel des Krans 30 hingewiesen wird. Abgesehen von den im Folgenden angeführten Unterschieden gelten die Erläuterungen zum zweiten Ausführungsbeispiel des Krans 30 somit auch beim vierten Ausführungsbeispiel.

Im Unterschied zum zweiten Ausführungsbeispiel ist beim vierten Ausführungsbeispiel des Krans 30 vorgesehen, dass sich die Steher 34 des Krans 30 auf gummibereiften Fahrwerken 33 abstützen. Das jeweilige Fahrwerk 33 weist im vierten Ausführungsbeispiel Reifen 81 auf, welche jeweils eine Lauffläche aus Gummi aufweisen. Die Reifen 81 können luftgefüllt sein. Die Laufflächen der Reifen 81 stützen sich auf Fahrwegen 80 des Untergrunds 45 ab. Der Kran 30 des vierten Ausführungsbeispiels ist somit auf dem Fahrweg 80 verfahrbar gelagert. Jedes der Fahrwerke 33 weist im vierten Ausführungsbeispiel Fahrantriebe 50 zum Antreiben zumindest eines der Reifen 81 an. Durch eine Ansteuerung der Fahrantriebe 50 kann der Kran 30 mit dem Kranträgers 32 in die einander entgegengesetzten Kran-Fahrrichtungen 70 verfahren werden, vgl. Fig. 13.

Der Kran 30 des vierten Ausführungsbeispiels könnte auch als gummibereifter Portalkran oder gummibereifter Stapelkran bezeichnet werden.

Im Grobpositioniermodus der Kransteuerung 1 ist im vierten Ausführungsbeispiel des Krans 30 vorgesehen, dass der Kran 30 in die einander entgegengesetzten Kran-Fahrrichtungen 70 entlang der Fahrwege 80 und die Laufkatze 36 in die einander entgegengesetzten Laufkatzen-Bewegungsrichtungen 71 und die Lastaufnahmevorrichtung 39 in die einander entgegengesetzten Hub-Richtungen 72 bewegbar ist. Hierzu wird insbesondere auf die Erläuterungen zum zweiten Ausführungsbeispiel des Krans 30 verwiesen.

Optional könnten die Fahrwerke 33 oder einzelne Reifen 81 der Fahrwerke 33 des Krans 30 des vierten Ausführungsbeispiels mittels Lenkantrieben um eine Vertikalachse drehbar sein, was in Fig. 13 nicht gesondert dargestellt ist. Dadurch ist ein Verfahren des Krans 30 um Kurven, d.h. eine Verdrehung des Krans 30 um die Vertikale, möglich. Weiters kann ein Versetzen des Krans 30 in, insbesondere orthogonal zu den einander entgegengesetzten Kran-Fahrrichtungen 70 ausgerichteten, Versetz-Richtungen realisiert werden, um die Fahrwege 80 zu wechseln. Dadurch können verschiedene Aufstellflächen von Containern 31, sogenannte Containergassen, mit dem Kran 30 bedient werden. Die Ansteuerung der Lenkantriebe könnte im Grobpositioniermodus wiederum mittels des Griffstücks 4 des Eingabegeräts 3 erfolgen. Im Grobpositioniermodus könnte dann vorgesehen sein, dass eine Verdrehung des Griffstücks 4 um die Hauptachse 5 zu einer Verdrehung des gesamten Krans 30, insbesondere der Reifen 81 der Fahrwerke 33, um die Vertikale umsetzbar ist.

Analog zum zweiten Ausführungsbeispiel weist die Transporteinrichtung 35 acht Hubwerksantriebe 52 - 59 zum individuellen Antreiben der Seiltrommeln 43 auf. Der Hubwerksantrieb 57 ist in Fig. 13 durch einen Steuerschrank verdeckt und daher nicht ersichtlich. Die nicht näher bezeichneten Seile der Transporteinrichtung 35 werden analog zum zweiten Ausführungsbeispiel jeweils an, an der Lastaufnahmevorrichtung 39 angeordneten, Umlenkrollen 49 umgelenkt. Das von der Seiltrommel abgewandte Ende eines jeweiligen Seils 44 ist an der Laufkatze 36 verankert. Dies ist in Fig. 13 nicht gesondert dargestellt. Die Feinpositionierung der Lastaufnahmevorrichtung 39 relativ zur Laufkatze 36 erfolgt entsprechend dem zweiten Ausführungsbeispiel, weshalb auf die Erläuterungen zum zweiten Ausführungsbeispiel des Krans 30 verwiesen wird.

In den gezeigten Ausführungsbeispielen der erfindungsgemäßen Krane 30 umfasst die Lastaufnahmevorrichtung 39 Greifelemente 40 zur Verbindung zumindest eines Containers 31 mit der Lastaufnahmevorrichtung 39. Derartige verriegelbare Greifelemente 40 sind bekannt und werden auch als Twist-Lock bezeichnet. Die Greifelemente 40 umfassen in den Ausführungsbeispielen zusätzlich noch klappbare Führungslaschen, welche auch als "Flipper" bezeichnet werden. Die Betätigung der Greifelemente 40 kann beispielsweise mit den auf dem Bedienpult 21 angeordneten Bedienelementen 13 erfolgen, vgl. Fig. 2. In anderen Ausführungsbeispielen der Kransteuerung 1 könnten noch weitere Bedienelemente 13 auf dem Bedienpult 21 zur Ansteuerung weiterer Aktuatoren des Krans 30 vorgesehen sein.

In den Ausführungsbeispielen handelt es sich bei den dargestellten Kranen 30 jeweils um Portalkrane. Die erfindungsgemäße Kransteuerung 1 könnte aber auch bei anderen Bauformen von Kranen zum Einsatz kommen. Beispielsweise könnte die Kransteuerung bei Brückenkranen oder anderen Kranen zum Umschlag von Containern 31 oder sonstigen Lasten eingesetzt werden. Im Weiteren könnte die erfindungsgemäße Kransteuerung 1 auch bei Turmdrehkranen eingesetzt werden.

Im in den Fig. 1 bis 3 dargestellten Ausführungsbeispiel einer Kransteuerung 1 ist vorgesehen, dass das Griffstück 4 sechs Freiheitsgrade aufweist. Dies ist nicht zwingend und hängt von den Gegebenheiten des Krans 30 ab. Beispielsweise könnte auf eine Möglichkeit zur Verdrehung des Griffstücks 4 um die Hauptachse 5 verzichtet werden, wenn der Kran 30 über keine entsprechenden Aktoren zum Umsetzen dieser Eingabebefehle verfügt.

Im dem in den Fig. 5 bis 6 dargestellten ersten Ausführungsbeispiel des Krans 30 ist zur Feinpositionierung eine Feinausrichtung der Lastaufnahmevorrichtung 39 relativ zur Laufkatze 36 in den orthogonal zu den Hub-Richtungen 72 ausgerichteten Horizontal-Richtungen 73, 73' und in den einander entgegengesetzten Hub-Richtungen 72 möglich. Im Weiteren ist auch ein Gieren der Lastaufnahmevorrichtung 39, d.h. eine Verdrehung um die einander entgegengesetzten Hub-Richtungen 72 möglich. Es wäre denkbar, bei einer abgewandelten Bauform des Krans 30 auch ein Nicken oder Rollen der Lastaufnahmevorrichtung 39 vorzusehen, wie dies im Zusammenhang mit dem zweiten Ausführungsbeispiel des erfindungsgemäßen Krans 30 erläutert wurde. Hierzu könnten beispielsweise die freien Seillängen der von den Seiltrommeln 43 abgewandten Abschnitte der Seile 44 verkürzt oder verlängert werden. Beispielsweise wäre es möglich, an und für sich bekannte Zusatzaggregate zur Verkürzung der freie Seillänge vorzusehen, um Verkippungen der Lastaufnahmevorrichtung 39 um die Horizontal-Richtungen 73, 73' zu realisieren. Die Ansteuerung der Zusatzaggregate erfolgt günstigerweise ebenfalls mit dem Eingabegerät 3, beispielsweise durch eine Erfassung von Schwenkbewegungen des Griffstücks 4 in die Schwenkrichtungen 14, 15 und deren Umsetzung in der Steuerelektronik 2 zur Ansteuerung dieser Zusatzaggregate.

**Legende zu den Hinweisziffern:**

| | | | |
|---|---|---|---|
| 1 | Kransteuerung | 31 | Container |
| 2 | Steuerelektronik | 32 | Kranträger |
| 3 | Eingabegerät | 33 | Fahrwerk |
| 4 | Griffstück | 34 | Steher |
| 5 | Hauptachse | 35 | Transporteinrichtung |
| 6, 6' | Schwenkebene | 36 | Laufkatze |
| 7 | Hauptebene | 37 | Seilangriffspunkt |
| 8 | Umschaltelement | 38 | Verschiebeglied |
| 9 | Aktor | 39 | Lastaufnahmevorrichtung |
| 10 | Aktor | 40 | Greifelement |
| 11 | Eingänge | 41 | Kranschiene |
| 12 | Ausgänge | 42 | Laufkatzenschiene |
| 13 | Bedienelement | 43 | Seiltrommel |
| 14 | Schwenkrichtungen | 44 | Seil |
| 15 | Schwenkrichtungen | 45 | Untergrund |
| 16 | Drehrichtungen | 46 | Führungsschiene |
| 17 | Verschieberichtungen | 47 | Drehwerk |
| 18 | Verschieberichtungen | 48 | Drehachse |
| 19 | Verschieberichtungen | 49 | Umlenkrolle |
| 20 | Steuerkabine | | |
| 21 | Bedienpult | 50 | Fahrantrieb |
| 22 | Armlehne | 51 | Laufkatzenantrieb |
| 23 | Steuersitz | 52 | Hubwerksantrieb |
| 24 | Kranbediener | 53 | Hubwerksantrieb |
| 25 | Referenzpunkt | 54 | Hubwerksantrieb |
| 26 | Hubwerksanordnung | 55 | Hubwerksantrieb |
| | | 56 | Hubwerksantrieb |
| 30 | Kran | 57 | Hubwerksantrieb |
| 58 | | | Hubwerksantrieb |
| 59 | | | Hubwerksantrieb |
| 60 | | | Feinpositionierantrieb |
| 61 | | | Feinpositionierantrieb |
| 62 | | | Feinpositionierantrieb |
| 63 | | | Feinpositionierantrieb |
| 70 | | | Kran-Fahrrichtungen |
| 71 | | | Laufkatzen-Bewegungsrichtungen |
| 72 | | | Hub-Richtungen |
| 73, 73' | | | Horizontal-Richtungen |
| 74 | | | Rollrichtungen |
| 75 | | | Nickrichtungen |
| 76 | | | Gierrichtungen |
| 77 | | | Drehrichtungen |
| 80 | | | Fahrweg |
| 81 | | | Reifen |

## Patentansprüche

1. Kransteuerung (1) zur Steuerung von Verfahrbewegungen eines Krans (30), insbesondere eines Portalkrans, wobei die Kransteuerung (1) eine Steuerelektronik (2) und zumindest ein mit der Steuerelektronik (2) verbundenes Eingabegerät (3) mit einem Griffstück (4) umfasst, wobei eine Hauptachse (5) des Griffstücks (4) zusammen mit dem Griffstück (4) in zumindest zwei, insbesondere orthogonal, zueinander ausgerichteten Schwenkrichtungen (14, 15) verschwenkbar ist und von der Steuerelektronik (2) elektrische Signale zur Ansteuerung von zumindest einem Aktor (9, 10) des Krans (30), in Abhängigkeit von einer Verstellung des Griffstücks (4) relativ zu einer Ursprungslage des Griffstücks (4), generierbar sind, **dadurch gekennzeichnet, dass** das Griffstück (4) mit der Hauptachse (5) relativ zur Ursprungslage zusätzlich in zumindest zwei, vorzugsweise drei, voneinander verschiedenen Verschieberichtungen (17, 18, 19) verschiebbar ist und von der Steuerelektronik (2) elektrische Signale zur Ansteuerung des zumindest einen Aktors (9, 10) des Krans (30), in Abhängigkeit von der Verstellung des Griffstücks (4) relativ zur Ursprungslage, generierbar sind.

2. Kransteuerung (1) nach Anspruch 1, **dadurch gekennzeichnet, dass** das Griffstück (4) relativ zur Ursprungslage zusätzlich um die Hauptachse (5) drehbar ist und von der Steuerelektronik (2) elektrische Signale zur Ansteuerung des zumindest einen Aktors (9, 10) des Krans (30), in Abhängigkeit von der Verstellung des Griffstücks (4) relativ zur Ursprungslage, generierbar sind.

3. Kransteuerung (1) nach Anspruch 1 oder 2, **dadurch gekennzeichnet, dass** ein Geschwindigkeitswert des zumindest einen Aktors (9, 10) von der Steuerelektronik (2) variierbar ist und der Geschwindigkeitswert von der Steuerelektronik (2) in Abhängigkeit von einem Ausmaß der Verstellung des Griffstücks (4) ausgehend von der Ursprungslage des Griffstücks (4) einstellbar ist.

4. Kransteuerung (1) nach einem der Ansprüche 1 bis 3, **dadurch gekennzeichnet, dass** das Griffstück (4) zumindest ein Rückstellelement zur selbsttätigen Rückstellung des Griffstücks (4) in die Ursprungslage aufweist.

5. Kransteuerung (1) nach einem der Ansprüche 1 bis 4, **dadurch gekennzeichnet, dass** die Kransteuerung (1) ein zwischen einer ersten und einer zweiten Schaltstellung umschaltbares Umschaltelement (8) aufweist, wobei in der ersten Schaltstellung ein Grobpositioniermodus und in der zweiten Schaltstellung ein Feinpositioniermodus der Kransteuerung (1) aktiviert ist.

6. Anordnung mit einer Steuerkabine (20) und einer Kransteuerung (1) nach einem der Ansprüche 1 bis 5, **dadurch gekennzeichnet, dass** das zumindest eine Eingabegerät (3) der Kransteuerung (1) in der Steuerkabine (20), vorzugsweise an einem in der Steuerkabine (20) angeordneten Steuersitz (23), angeordnet ist.

7. Kran (30), insbesondere Portalkran, wobei der Kran (30) zumindest drei, unabhängig voneinander ansteuerbare, Aktoren (9, 10) zum Bewegen zumindest eines Containers (31) oder einer sonstigen Last und eine Kransteuerung (1) nach einem der Ansprüche 1 bis 5 aufweist, **dadurch gekennzeichnet, dass** von der Steuerelektronik (2), in Abhängigkeit von der Verstellung des Griffstücks (4) relativ zur Ursprungslage, elektrische Signale zur Ansteuerung der Aktoren (9, 10) des Krans (30) generierbar sind.

8. Kran (30) nach Anspruch 7, **dadurch gekennzeichnet, dass** die in einem oder dem Grobpositioniermodus der Kransteuerung (1) mittels des Eingabegeräts (3) ansteuerbaren Aktoren (9, 10) des Krans (30) zumindest einen Fahrantrieb (50) zum Bewegen eines Kranträgers (32) des Krans (30), vorzugsweise des gesamten Krans (30), in einander entgegengesetzte Kran-Fahrrichtungen (70) und zumindest einen Laufkatzenantrieb (51) zum Bewegen einer Laufkatze (36) des Krans (30) entlang des Kranträgers (32) in einander entgegengesetzte Laufkatzen-Bewegungsrichtungen (71) und zumindest einen Hubwerksantrieb (52 - 59) zum Bewegen einer Lastaufnahmevorrichtung (39) relativ zur Laufkatze (36) in einander entgegengesetzte Hub-Richtungen (72) umfassen.

9. Kran (30) nach einem der Ansprüche 7 oder 8, **dadurch gekennzeichnet, dass** die in einem oder dem Feinpositioniermodus der Kransteuerung (1) mittels des Eingabegeräts (3) ansteuerbaren Aktoren (9, 10) des Krans (30) Feinpositionierantriebe (60-63) oder eine Vielzahl unabhängig voneinander ansteuerbarer Hubwerksantriebe (52-59) zur Feinausrichtung der Lastaufnahmevorrichtung (39) relativ zur Laufkatze (36) in den oder in einander entgegengesetzten Hub-Richtungen (72) und/oder in orthogonal zu den Hub-Richtungen (72) ausgerichteten Horizontal-Richtungen (73, 73') und/oder zum Rollen und/oder Nicken und/oder Gieren der Lastaufnahmevorrichtung (39) umfassen.

10. Kran (30) nach Anspruch 8 und 9 und mit einer Kransteuerung (1) nach Anspruch5, **dadurch gekennzeichnet, dass** in der ersten Schaltstellung des Umschaltelements (8) der Grobpositioniermodus und in der zweiten Schaltstellung des Umschaltelements (8) der Feinpositioniermodus der Kransteuerung (1) aktiviert ist.

11. Verfahren zur Steuerung von Verfahrbewegungen eines Krans (30), insbesondere eines Portalkrans, mittels einer Kransteuerung (1) nach einem der Ansprüche 1 bis 5, **dadurch gekennzeichnet, dass** von der Steuerelektronik (2) die elektrischen Signale zur Ansteuerung des zumindest einen Aktors (9, 10) des Krans (30), in Abhängigkeit von der Verstellung des Griffstücks (4) relativ zur Ursprungslage des Griffstücks (4) in die zumindest zwei, insbesondere orthogonal, zueinander ausgerichteten Schwenkrichtungen (14, 15) und/oder in die zumindest zwei, vorzugsweise drei, voneinander verschiedenen Verschieberichtungen (17, 18, 19) und gegebenenfalls um die Hauptachse (5) generiert werden.

## Claims

1. Crane controller (1) for controlling travel movements of a crane (30), in particular a gantry crane, the crane controller (1) having control electronics (2) and at least one input device (3) which is connected to the control electronics (2) and which has a grip part (4), a main axis (5) of the grip part (4) being pivotable together with the grip part (4) in at least two pivoting directions (14, 15) oriented, in particular orthogonally, in relation to one another and electrical signals for activating at least one actuator (9, 10) of the crane (30) being able to be generated by the control electronics (2) as a function of an adjustment of the grip part (4) relative to an original position of the grip part (4), **characterised in that** the grip part (4) is displaceable with the main axis (5) additionally in at least two, preferably three, different displacement directions (17, 18, 19) relative to the original position and electrical signals for activating the at least one actuator (9, 10) of the crane (30) can be generated by the control electronics (2) as a function of the adjustment of the grip part (4) relative to the original position.

2. Crane controller (1) according to claim 1, **characterised in that** the grip part (4) is additionally rotatable about the main axis (5) relative to the original position, and electrical signals for activating the at least one actuator (9, 10) of the crane (30) can be generated by the control electronics (2) as a function of the adjustment of the grip part (4) relative to the original position.

3. Crane controller (1) according to claim 1 or 2, **characterised in that** a speed value of the at least one actuator (9, 10) can be varied by the control electronics (2), and the speed value can be set by the control electronics (2) as a function of the extent of the adjustment of the grip part (4) starting from the original position of the grip part (4).

4. Crane controller (1) according to any of claims 1 to 3, **characterised in that** the grip part (4) comprises at least one resetting element for automatically resetting the grip part (4) to its original position.

5. Crane controller (1) according to any of claims 1 to 4, **characterised in that** the crane controller(1) comprises a switching element (8) which can be switched between a first and second switching position, a rough-positioning mode being activated in the first switching position and a precise-positioning mode of the crane controller (1) being activated in the second switching position.

6. Arrangement with a control cab (20) and a crane controller (1) according to any of claims 1 to 5, **characterised in that** the at least one input device (3) of the crane controller (1) is arranged in the control cab (20), preferably on a control seat (23) arranged in the control cab (20).

7. Crane (30), in particular a gantry crane, the crane (30) comprising at least three actuators (9, 10) which can be activated independently of one another for moving at least one container (31) or other load, and a crane controller (1) according to any of claims 1 to 5, **characterised in that** electrical signals for activating the actuators (9, 10) of the crane (30) can be generated by the control electronics (2) as a function of the adjustment of the grip part (4) relative to the original position.

8. Crane (30) according to claim 7, **characterised in that** the actuators (9, 10) of the crane (30), which can be activated by means of the input device (3) in a or the rough-positioning mode of the crane controller (1), have at least one travel drive (50) for moving a crane girder (32) of the crane (30), preferably the entire crane (30), in mutually opposed crane travel directions (70), and at least one trolley drive (51) for moving a trolley (36) of the crane (30) along the crane girder (32) in mutually opposed trolley movement directions (71), and at least one hoist drive (52-59) for moving a load-bearing device (39) relative to the trolley (36) in mutually opposed lifting/lowering directions (72).

9. Crane (30) according to either claim 7 or 8, **characterised in that** the actuators (9, 10) of the crane (30), which can be activated by means of the input device (3) in a or the precise-positioning mode of the crane controller (1), have precise-positioning drives (60-63) or a plurality of hoist drives (52-59), which can be activated independently of one another, for the precise alignment of the load-bearing device (39) relative to the trolley (36) in the or in mutually opposed lifting/lowering directions (72) and/or in horizontal directions (73, 73') oriented orthogonally to the lifting/lowering directions (72) and/or for the rolling and/or pitching and/or yawing of the load-bearing device (39).

10. Crane (30) according to claim 8 and 9 and having a crane controller (1) according to claim 5, **characterised in that** the rough-positioning mode is activated in the first switching position of the switching element (8) and the precise-positioning mode of the crane controller (1) is activated in the second switching position of the switching element (8).

11. Method for controlling travel movements of a crane (30), in particular a gantry crane, by means of a crane controller (1) according to any of claims 1 to 5, **characterised in that** the electrical signals for activating the at least one actuator (9, 10) of the crane (30) are generated by the control electronics (2) as a function of the adjustment of the grip part (4) relative to the original position of the grip part (4) in the at least two pivoting directions (14, 15) oriented, in particular orthogonally, in relation to one another and/or in the at least two, preferably three, different displacement directions (17, 18, 19) and optionally about the main axis (5).

## Revendications

1. Commande de grue (1) pour commander des mouvements de déplacement d'une grue (30), en particulier d'un portique de manutention, la commande de grue (1) comprenant une électronique de commande (2) et au moins un périphérique d'entrée (3) relié à l'électronique de commande (2) et comportant une poignée (4), un axe principal (5) de la poignée (4) pouvant pivoter avec la poignée (4) dans au moins deux directions de pivotement (14, 15) orientées l'une par rapport à l'autre, en particulier de façon orthogonale, et des signaux électriques pouvant être générés par l'électronique de commande (2) pour commander au moins un actionneur (9, 10) de la grue (30), en fonction d'un déplacement de la poignée (4) par rapport à une position d'origine de la poignée (4), **caractérisé en ce que** la poignée (4) peut être en plus déplacée avec l'axe principal (5) par rapport à la position d'origine dans au moins deux, de préférence trois, directions de déplacement (17, 18, 19) différentes, et des signaux électriques peuvent être générés par l'électronique de commande (2) pour commander ledit au moins un actionneur (9, 10) de la grue (30) en fonction du déplacement de la poignée (4) par rapport à la position d'origine.

2. Commande de grue (1) selon la revendication 1, **caractérisée en ce que** la poignée (4) peut en outre tourner autour de l'axe principal (5) par rapport à la position d'origine, et des signaux électriques peuvent être générés par l'électronique de commande (2) pour commander ledit au moins un actionneur (9, 10) de la grue (30) en fonction du déplacement de la poignée (4) par rapport à la position d'origine.

3. Commande de grue (1) selon la revendication 1 ou 2, **caractérisée en ce qu'**une valeur de vitesse dudit au moins un actionneur (9, 10) peut être modifiée par l'électronique de commande (2), et la valeur de vitesse peut être réglée par l'électronique de commande (2) en fonction d'une ampleur du déplacement de la poignée (4) à partir de la position d'origine de la poignée (4).

4. Commande de grue (1) selon l'une des revendications 1 à 3, **caractérisée en ce que** la pièce de poignée (4) présente au moins un élément de rappel pour le retour automatique de la poignée (4) dans la position d'origine.

5. Commande de grue (1) selon l'une des revendications 1 à 4, **caractérisée en ce que** la commande de grue (1) présente un élément de commutation (8) pouvant être commuté entre une première et une deuxième position de commutation, un mode de positionnement grossier de la commande de grue (1) étant activé dans la première position de commutation et un mode de positionnement fin étant activé dans la deuxième position de commutation.

6. Agencement avec une cabine de commande (20) et une commande de grue (1) selon, l'une des revendications 1 à 5, **caractérisé en ce que** ledit au moins un périphérique d'entrée (3) de la commande de grue (1) est disposé dans la cabine de commande (20), de préférence sur un siège de commande (23) disposé dans la cabine de commande (20).

7. Grue (30), en particulier portique de manutention, la grue (30) étant muni d'au moins trois actionneurs (9, 10) pouvant être commandés indépendamment les uns des autres, pour déplacer au moins un conteneur (31) ou une autre charge, et d'une commande de grue (1) selon l'une des revendications 1 à 5, **caractérisée en ce que** pour commander les actionneurs (9, 10) de la grue (30), des signaux électriques peuvent être générés par l'électronique de commande (2) en fonction du déplacement de la poignée (4) par rapport à la position d'origine.

8. Grue (30) selon la revendication 7, **caractérisée en ce que** les actionneurs (9, 10) de la grue (30) pouvant être commandés dans un mode de positionnement grossier, ou dans le mode de positionnement grossier, de la commande de grue (1) au moyen du périphérique d'entrée (3) comprennent au moins un entraînement de déplacement (50) pour déplacer un support de grue (32) de la grue (30), de préférence l'ensemble de la grue (30), dans des directions de déplacement de grue (70) opposées entre elles, et au moins un entraînement de chariot (51) pour déplacer un chariot (36) de la grue (30) le long du support de grue (32) dans des directions de déplacement de chariot (71) opposées entre elles, et au moins un entraînement de mécanisme de levage (52-59) pour déplacer un dispositif de réception de charge (39) par rapport au chariot (36) dans des directions de levage (72) opposées entre elles.

9. Grue (30) selon l'une des revendications 7 ou 8, **caractérisée en ce que** les actionneurs (9, 10) de la grue (30) pouvant être commandés dans un mode de positionnement fin, ou dans le mode de positionnement fin, de la commande de grue (1) au moyen du périphérique d'entrée (3) comprennent des entraînements de positionnement fin (60-63) ou une pluralité d'entraînement de mécanisme de levage (52-59) pouvant être commandés indépendamment les uns des autres pour une orientation fine du dispositif de réception de charge (39) par rapport au chariot (36) dans les directions de levage (72), ou dans des directions de levage (72), opposées entre elles et/ou dans des directions horizontales (73, 73') orientées orthogonalement aux directions de levage (72) et/ou pour le roulement et/ou le tangage et/ou le lacet du dispositif de réception de charge (39).

10. Grue (30) selon les revendications 8 et 9 et avec une commande de grue (1) selon la revendication 5, **caractérisée en ce que** dans la première position de commutation de l'élément de commutation (8), le mode de positionnement grossier est activé, et dans la deuxième position de commutation de l'élément de commutation (8), le mode de positionnement fin de la commande de grue (1) est activé.

11. Procédé pour commander des mouvements de déplacement d'une grue (30), en particulier d'un portique de manutention, au moyen d'une commande de grue (1) selon l'une des revendications 1 à 5, **caractérisé en ce que** les signaux électriques sont générés par l'électronique de commande (2) pour commander ledit au moins un actionneur (9, 10) de la grue (30) en fonction du déplacement de la poignée (4) par rapport à la position d'origine de la poignée (4) dans lesdites au moins deux directions de pivotement (14, 15) orientées l'une par rapport à l'autre, en particulier de façon orthogonale, et/ou dans lesdites au moins deux, de préférence trois, directions de déplacement (17, 18, 19) différentes et éventuellement autour de l'axe principal (5).
